# EUROPEAN PATENT APPLICATION

(11) **EP 0 863 316 A1**
(43) Date of publication of application: **09.09.1998**
(21) Application number: 96939329.7
(22) Date of filing: 29.11.1996
(51) Int. Cl.: F16B 7/14

(54) **STEPWISE EXPANSION MECHANISM**

(30) Priority: 05.12.1995 JP 316669/95; 05.12.1995 JP 316670/95; 06.03.1996 JP 48854/96
(71) Applicant: Ariga Kogyo Corp., Tokyo 101 (JP)
(72) Inventor: ARIGA, Youichi, Warabi-shi, Saitama 335 (JP)
(74) Representative: Gold, Tibor Z.
(86) International application number: JP9603510
(87) International publication number: WO9721037

(57) **Abstract**

A stepwise expansion mechanism, can be extended and shortened stepwise by a push or touch on it. The mechanism is shortened stepwise by pushing an outer slider (101) or an inner slider (102) against a force of an expanding device (117). During this process the sliders slide on each other and a pawl (103) is sequentially engaged in recesses (110a) to (110c) to enable it to be shortened stepwise. On the other hand, if the outer slider (101) or inner slider (102) is further pushed in the shortest state, a guide (111) is actuated to inhibit the pawl from entering the recesses, and such a state is maintained by another device. As a result, the expanding device allows the sliders to slide on each other in such a manner that the expansion mechanism is extended.

## Description

### [TECHNICAL FIELD]

The present invention relates to a telescopic mechanism usable as a mechanism for opening/closing a ventilation passage of a ventilation apparatus, a mechanism for adjusting the height of a headrest provided on a seat of a vehicle, or the like.

### [BACKGROUND ART]

As is shown in, for example, Japanese Utility Model Publication (*kokoku*) No. 6-12470, there has been known a telescopic mechanism which is used to operate a member for opening/closing a ventilation passage of a ventilation apparatus and which provides extending/retracting operation. Also, as is disclosed in Japanese Utility Model Publication (*kokoku*) No. 63-9762, a slider mechanism usable as a telescopic mechanism has been known. The telescopic mechanism disclosed in Japanese Utility Model Publication No. 6-12470 is superior in terms of easiness of operation, because the extending/retracting operation can be effected through a single operation of pushing. However, it is difficult to impart the mechanism with a structure that enables multi-step telescopic action; i.e., a structure that enables stepwise length change, and therefore the mechanism has a functional limitation. The slide mechanism disclosed in Japanese Utility Model Publication No. 63-9762 enables multi-step telescopic action. However, since an external operation must be applied to the mechanism for each of the extension and contraction motions, the mechanism will encounter difficulty in terms of easiness of operation when the mechanism is used in an apparatus, in which pushing operation can be easily performed but pulling operation is difficult to perform, such as a ventilation apparatus as disclosed in Japanese Utility Model Publication No. 6-12470 or as a headrest of a vehicle.

### [DISCLOSURE OF THE INVENTION]

The present invention was accomplished in view of the foregoing fact and its object is to provide a telescopic mechanism which provides multi-step telescopic action in response to a single pressing operation.

A stepwise telescopic mechanism according to the present invention comprises: an outer slider; an inner slider disposed within the outer slider in a slidable manner; a plurality of engagement recesses formed in either one of the outer slider and the inner slider such that the engagement recesses are aligned at predetermined intervals in the slide direction; an engagement claw built into the inner slider or the outer slider, when a relative slide in a contraction direction is effected between the inner slider and the outer slider, the engagement claw coming into engagement with one of the plurality of engagement recesses to thereby bring the inner slider and the outer slider into an engaged state, when a relative slide in a contraction direction is effected between the inner slider and the outer slider; engagement-urging means for urging the engagement claw in an engaging direction; engagement-canceling means for canceling engagement of the engagement claw with a certain engagement recess, when the slide in the contraction direction is effected, in order to enable engagement of the engagement claw with another engagement recess; engagement-impossible-state-creating means for creating a state in which the engagement claw is disabled from coming into engagement with the engagement recesses; engagement-impossible-state-maintaining means for maintaining the engagement impossible state created by the engagement-impossible-state-creating means; engagement-impossible-state-canceling means for canceling the engagement impossible state maintained by the engagement-impossible-state-maintaining means; and extension-direction-urging means for producing urging force for urging the inner slider and the outer slider to slide in an extension direction opposite to the contraction direction.

The contraction operation of the stepwise telescopic mechanism is effected through pressing the inner slider or the outer slider against the urging force of the extension-direction-urging means in order to produce a relative slide in the contraction direction between the sliders. During the slide in the contraction direction, the engagement claw successively comes into engagement with the plurality of engagement recesses. Thus, the stepwise telescopic mechanism maintains a length corresponding to the position of an engagement recess with which the engagement claw is in engagement, whereby stepwise contraction is enabled. Meanwhile, the extension motion of the stepwise telescopic mechanism is effected by means of the urging force of the extension-direction-urging means after the stepwise telescopic mechanism has contracted to a minimum length. Specifically, when the inner slider or the outer slide is pushed further in the state in which the stepwise telescopic mechanism has contracted to its shortest length; i.e., the engagement claw is in engagement with the final engagement recess, the engagement-impossible-state-creating means operates to bring the engagement claw into a state in which the engagement claw is disabled from coming into engagement with the engagement recesses. Further, this state is maintained by the engagement-impossible-state-maintaining means. While the above-described state is maintained, a slide in the extension direction is automatically effected by means of the urging force of the extension-direction-urging means until the stepwise telescopic mechanism extends to the maximum length. When the stepwise telescopic mechanism has extended to the maximum length, the engagement-impossible state of the engagement claw is canceled by means of the engagement-impossible-state-canceling means. Thus, the above-described stepwise contraction becomes possible to be effected again.

The above-described stepwise telescopic mechanism can be one of two different types depending on the operation of establishing/braking the engagement of the engagement claw with respect to the engagement recesses. One is a rotary type in which the engagement claw comes into engagement with the engagement recesses through rotation of the engagement claw. The other is a slide type in which the engagement claw comes into engagement with the engagement recesses through slide of the engagement claw.

The rotary type can be constructed into one of different structures depending on the scheme of maintaining the engaged state in order to stop relative slide movement between the inner slider and the outer slider. In one structure for the rotary type, the engaged state is established through pressure contact of the engagement claw against a pressure reception surface provided on the outer slider.

In this structure, the plurality of engagement recesses are provided on the outer slider, while the pressure reception surface is provided on the outer slider to be located on the side opposite the side where the engagement recesses are provided. A claw is provided at the tip end of the engagement claw, and a pressure contact portion is provided at the base end of the engagement claw. The engagement claw is rotatably built into the tip end portion of the inner slider via a rotary shaft which supports the engagement claw at an intermediate position between the claw and the pressure contact portion. When the claw of the engagement claw is in engagement with one of the engagement recesses of the outer slider, the pressure contact portion of the engagement claw is in pressure contact with the pressure reception surface of the outer slider while thrusting against the pressure reception surface. Thus, the engaged state of the inner and outer sliders is established.

In another structure for the rotary type, the engaged state is established through pressure contact of the engagement claw against an inner surface of the engagement-claw-accommodating space provided in the outer slider. In this structure, the engagement recesses are provided on the inner slider, while the engagement-claw-accommodating apace is formed in the outer slider. The claw is provided at the tip end of the engagement claw, and the pressure contact portion is provided at the base end of the engagement claw. The engagement claw is rotatably built into the engagement-claw-accommodating space of the outer slider via a rotary shaft which supports the engagement claw at an intermediate position between the claw and the pressure contact portion.. When the claw of the engagement claw is in engagement with one of the engagement recesses of the inner slider, the pressure contact portion of the engagement claw is in pressure contact with the inner surface of the engagement-claw-accommodating space in order to establish the engaged state of the inner and outer sliders.

In still another structure for the rotary type, the engaged state is established in such a way that upon reception of urging force of the extension-direction-urging means, the engagement claw presses the inner slider against the outer slider. That is, since the tip end of the engagement claw moves along an arcuate locus when the engagement claw rotates, the inner slider is pressed against the outer slider due to the arcuate movement of the tip end of the engagement claw when the engagement claw―whose tip end claw is in engagement with the engagement recess―receives the urging force of the extension-direction-urging means and the engagement claw is then abut to start its rotation. The inner and outer sliders are brought into the engaged state utilizing this operation.

Meanwhile, the slide type can be constructed in, for example, a structure in which the engagement claw is built into the inner slider or the outer slider to be slidable in a direction intersecting the slide direction of the inner and outer sliders, and in which through advance slide of the engagement claw, the claw provided at the tip end of the engagement claw comes into engagement with the engagement recesses formed on the inner slider or the outer slider in order to bring the inner and outer sliders into the engaged state.

For the rotary type engagement claw, a torsion spring, a extension spring, or the like is used as the engagement-urging means of the stepwise telescopic mechanism. In this case, there is employed a structure in which the spring applies rotational urging force to the engagement claw in the direction such that the claw of the engagement claw comes into engagement with the engagement recesses. For the slide type engagement claw, a compression spring or the like is used as the engagement-urging means of the stepwise telescopic mechanism. In this case, there is employed a structure in which one end of the spring abuts the engagement claw, while the other end of the spring abuts the inner slide or the outer slide in order to apply slide urging force to the engagement claw in the direction such that the claw of the engagement claw comes into engagement with the engagement recesses.

The engagement-canceling means of the stepwise telescopic mechanism is implemented in the form of an engagement-canceling surface formed at the claw of the engagement claw. For the engagement-canceling means, there is employed a structure in which the engagement claw is rotated (for the rotary type engagement claw), or is slid (for the slide type engagement claw), in a direction of breaking contact between the engagement claw and the engagement recesses by use of a component force generated due to pressure contact of the engagement-canceling surface against the inside surface or the edge of the engagement recess when the inner slider or the outer slider is pushed.

The engagement-impossible-state-creating means of the stepwise telescopic mechanism is implemented in the form of an engagement-disabling guide portion provided on the outer slider to be located on one side of the engagement recesses in its alignment direction. For the engagement-impossible-state-creating means, there is employed a structure in which the engagement claw is rotated (for the rotary type engagement claw), or slide (for the slide type engagement claw), to a predetermined position in the disengaging direction by use of a component force generated due to pressure contact of the engagement claw against the engagement-disabling guide portion when the inner slider or the outer slider is further pushed in its most contracted state.

When the engagement claw is of the rotary type, the engagement-impossible-state-maintaining means is implemented through combination of an engagement reception portion provided on the inner slider and an engagement portion provided on the engagement claw, and there is employed a structure such that when the engagement claw is rotated to a predetermined position by means of the engagement-disabling guide portion, the engagement portion of the engagement claw comes into engagement with the engagement reception portion, while creating a state in which the urging by the engagement-urging means is restricted.

The engagement-impossible-state-canceling means used in combination with the engagement-impossible-state-maintaining means for the rotary type engagement claw is implemented in the form of an engagement-impossible-state-canceling guide portion provided on the outer slider to be located on the side of the engagement recesses in its alignment direction opposite the side where the engagement-disabling guide surface is formed. For the engagement-impossible-state-canceling means, there is employed a structure such that when the telescopic mechanism extends to the maximum length due to the urging force of the extension-direction-urging means, the engagement claw comes into pressure contact with the engagement-impossible-state-canceling guide portion and rotates in the engaging direction, thereby canceling the above-described engaged state.

The engagement-impossible-state-canceling means used in combination with the engagement-impossible-state-maintaining means for the rotary type engagement claw can be of one of two different types. A first type is for the case where the engagement claw is attached to the inner slider. In the engagement-impossible-state-cancelling means of the first type is implemented in the form of an engagement-impossible-state-canceling guide portion provided on the outer slider to be located on the side of the engagement recesses in its alignment direction opposite the side where the engagement-disabling guide surface is formed. In this structure, when the telescopic mechanism extends to the maximum length due to the urging force of the extension-direction-urging means, the engagement claw comes into pressure contact with the engagement-impossible-state-canceling guide portion and rotates in the engaging direction, thereby canceling the engagement of the engagement portion with the engagement reception portion. A second type is for the case where the engagement claw is attached to the outer slider. In the engagement-impossible-state-cancelling means of the second type is implemented in the form of a pressure contact member provided at the tip end portion of the extension-direction-urging means. In this structure, when the telescopic mechanism extends to the maximum length due to the urging force of the extension-direction-urging means, the pressure contact member comes into pressure contact with the engagement claw to cause the engagement claw to rotate in the engaging direction, thereby canceling the engagement of the engagement portion with the engagement reception portion.

When the engagement claw is of the slide type, the engagement-impossible-state-maintaining means is implemented through combination of an engagement reception portion provided on the inner slider and an engagement portion provided on the engagement claw, and there is employed a structure such that when the engagement claw is slid to a predetermined position by means of the engagement-disabling guide portion, the engagement portion of the engagement claw comes into engagement with the engagement reception portion, whereby the engagement claw is brought into the engagement-impossible state.

The engagement-impossible-state-canceling means used in combination with the engagement-impossible-state-maintaining means for the slide type engagement claw is implemented in the form of an engagement-impossible-state-canceling guide portion provided on the outer slider to be located on the side opposite the side where the engagement recesses are provided. For the engagement-rnpossible-state-canceling means, there is employed a structure such that when the telescopic mechanism extends to the maximum length due to the urging force of the extension-direction-urging means, due to a component force generated by pressure contact of the engagement claw with the engagement-impossible-state-canceling guide portion, the engagement of the engagement portion with the engagement reception portion is canceled, while the engagement claw is slid in the engaging direction.

The engagement-impossible-state-canceling means used in combination with the engagement-impossible-state-maintaining means for the slide type engagement claw can also be of one of two different types. A first type is for the case where the engagement claw is attached to the inner slider. In the cngagement-impossible-state-cancelling means of the first type is implemented in the form of an engagement-impossible-state-canceling guide portion provided on the outer slider to be located on the side opposite the side where the engagement recesses are provided. In this structure, when the telescopic mechanism extends to the maximum length due to the urging force of the extension-direction-urging means, the engagement of the engagement portion with the engagement reception portion is canceled due to a component force generated by pressure contact of the engagement claw with the engagement-impossible-state-canceling guide portion, while the engagement claw is caused to slide in the engaging direction. A second type is for the case where the engagement claw is attached to the outer slider. In the engagement-impossible-state-cancelling means of the second type is implemented in the form of a pressure contact member provided at the tip end portion of the extension-direction-urging means. In this structure, when the telescopic mechanism extends to the maximum length due to the urging force of the extension-direction-urging means, the pressure contact member comes into pressure contact with the engagement claw to cause the engagement claw to slide in the engaging direction.

The stepwise telescopic mechanism of the present invention as described above can effect telescopic motion through a single operation of pushing one of the sliders. Therefore, the stepwise telescopic mechanism can be suitable for use as a mechanism element of apparatuses in which pushing operation can be easily performed but pulling operation is difficult to perform.

### [BRIEF DESCRIPTION OF THE DRAWINGS]

FIG. 1 is a cross-sectional view of a stepwise telescopic mechanism according to a first embodiment, showing its most contracted state;
FIG. 2 is a reduced cross-sectional view showing a state in which the telescopic mechanism is about to extend from the state shown in FIG. 1;
FIG. 3 is a reduced cross-sectional view showing a state in which the telescopic mechanism is extending from the state shown in FIG. 2;
FIG. 4 is a reduced cross-sectional view showing a state in which the telescopic mechanism has extended to the maximum length subsequently to the slate shown in FIG. 3;
FIG. 5 is a reduced cross-sectional view showing a state in which the telescopic mechanism is about to contract one step from the state shown in FIG. 4;
FIG. 6 is a reduced cross-sectional view showing a state in which the telescopic mechanism has contracted one step subsequent to the state shown in FIG. 5;
FIG. 7 is a partially omitted side view of the inner slider in the state shown in FIG. 4, as viewed from the direction of DA in FIG. 4;
FIG. 8 is a partially omitted side view of the stepwise telescopic mechanism in the state shown in FIG. 4, as viewed from the direction of DA in FIG. 4;
FIG. 9 is a cross-sectional view of a stepwise telescopic mechanism according to a second embodiment, showing its most contracted state;
FIG. 10 is a partially enlarged view as viewed from the direction of DB in FIG. 9;
FIG. 11 is an overall perspective view of a stepwise telescopic mechanism according to a third embodiment;
FIG. 12 is a cross-sectional view taken along line SA-SA in FIG. 11;
FIG. 13 is a partially enlarged cross-sectional view corresponding to FIG. 12;
FIG. 14 is a structural view of an engagement-claw-accommodating space as viewed from the direction of arrow DC in FIG. 13;
FIG. 15 is an explanatory view showing operation of the stepwise telescopic mechanism according to the third embodiment;
FIG. 16 is a cross-sectional view of a main portion of a stepwise telescopic mechanism according to a fourth embodiment, corresponding to FIG. 13;
FIG. 17 is an explanatory view showing a state in which the engagement claw is in engagement with the engagement reception portion;
FIG. 18 is an overall perspective view of a stepwise telescopic mechanism according to a fifth embodiment;
FIG. 19 is a cross-sectional view taken along line SB-SB in FIG. 18;
FIG. 20 is a partially enlarged cross-sectional view corresponding to FIG. 19;
FIG. 21 is an enlarged internal view of an engagement-claw-accommodating space as viewed from the direction of arrow DE in FIG. 20;
FIG. 22 is an explanatory view showing a state in which the engagement claw is in engagement with the engagement reception member;
FIG. 23 is an explanatory view showing operation of the stepwise telescopic mechanism according to the fifth embodiment;
FIG. 24 is a cross-sectional view corresponding to FIG. 19 and showing operation of a stepwise telescopic mechanism according to a sixth embodiment;

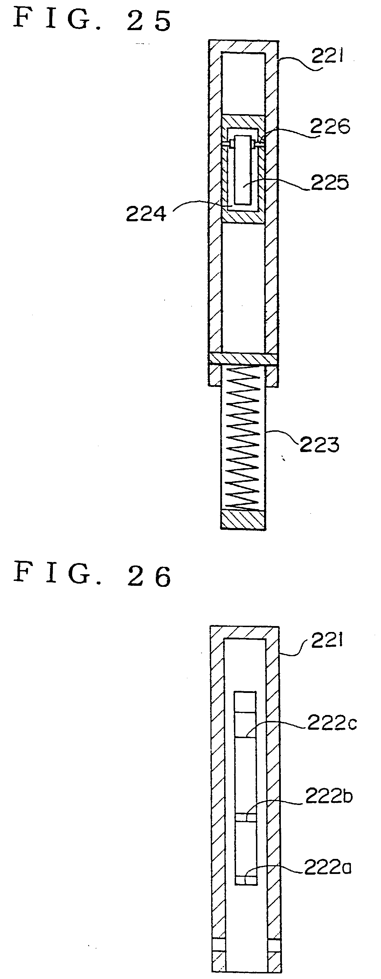

FIG. 25 is a cross-sectional view taken along line SC-SC in section (a) of FIG. 24;
FIG. 26 is a cross-sectional view of the outer slider corresponding to FIG. 25;
FIG. 27 is a partially enlarged cross-sectional view corresponding to section (a) of FIG. 24;
FIG. 28 is a partially enlarged cross-sectional view taken along line SE-SE in FIG. 27;
FIG. 29 is a cross-sectional view of a main portion of a stepwise telescopic mechanism according to a seventh embodiment, showing its most contracted state;
FIG. 30 is a cross-sectional view taken along line SF-SF in FIG. 29;
FIG. 31 is a cross-sectional view taken along line SB-SB in FIG. 30;
FIG. 32 is a cross-sectional view of the stepwise telescopic mechanism according to the seventh embodiment, showing its most contracted state;
FIG. 33 is a cross-sectional view showing a state in which the telescopic mechanism is about to extend from the state shown in FIG. 32;
FIG. 34 is a cross-sectional view showing a state in which the telescopic mechanism has extended to the maximum length subsequently to the state shown in FIG. 33;
FIG. 35 is a cross-sectional view showing a state in which the telescopic mechanism is about to contract one step from the state shown in FIG. 34;
FIG. 36 is a cross-sectional view of a stepwise telescopic mechanism according to an eighth embodiment;
FIG. 37 is an enlarged view showing the relationship between the engagement claw and the pressure contact member;
FIG. 38 is a plan view of the engagement claw as viewed from the direction of arrow DE in FIG. 37;
FIG. 39 is a cross-sectional view of a ventilation apparatus utilizing the stepwise telescopic mechanism according to the present invention; and

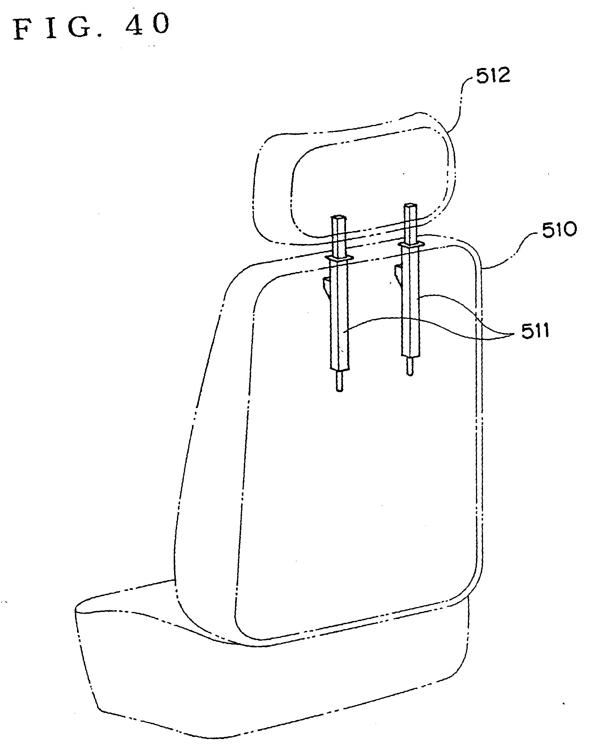

FIG. 40 is a perspective view of a head rest utilizing the stepwise telescopic mechanism according to the present invention.

### [BEST MODE FOR CARRYING OUT THE INVENTION]

### First Embodiment:

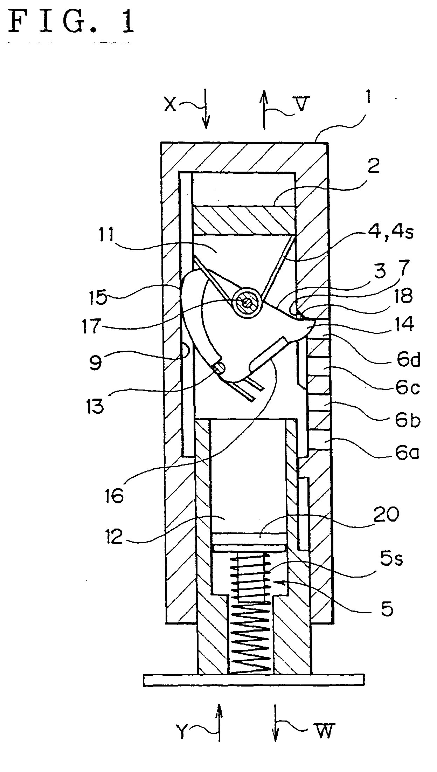

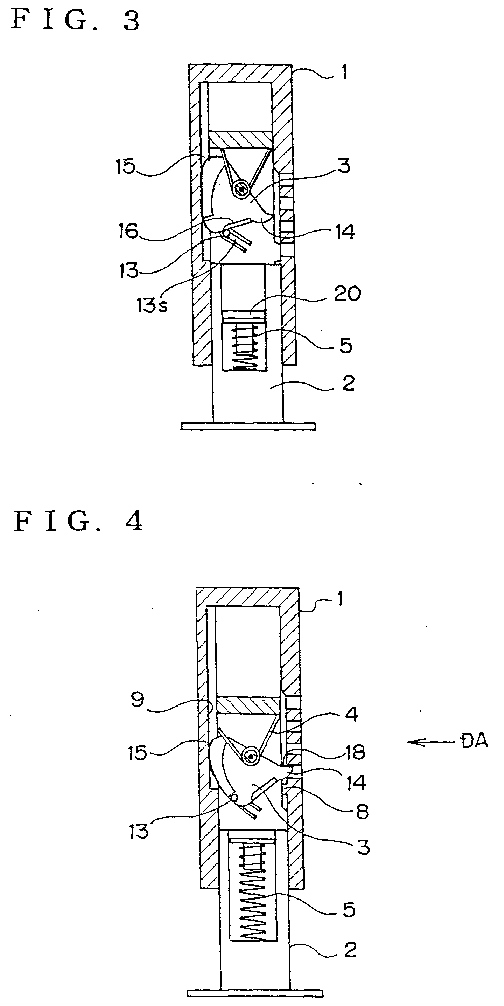

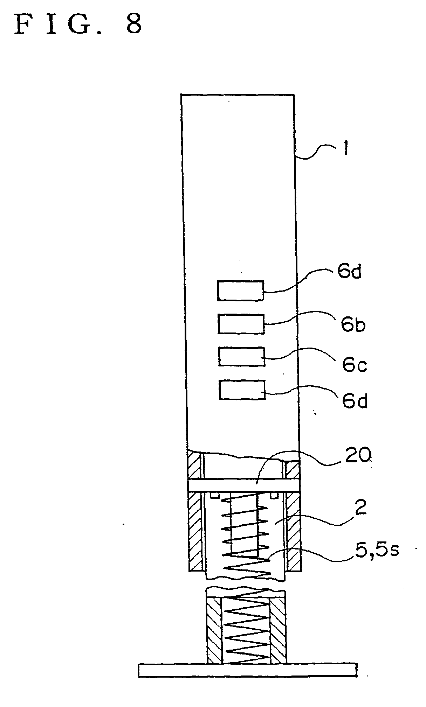

As shown in FIGS. 1 - 8, a stepwise telescopic mechanism according to a first embodiment of the present invention includes, as main elements, an outer slider 1, an inner slider 2, an engagement claw 3, engagement-urging means 4, and extension-direction-urging means 5.

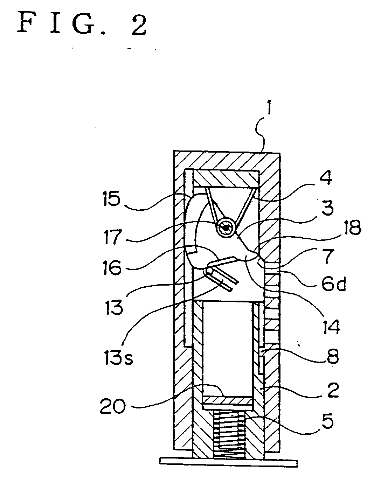

The outer slider 1 may be formed in a rectangular cylindrical shape having a closed end, as in the illustrated example, or in a tubular shape. A plurality of engagement recesses 6 (6a - 6d), the number of which corresponds to an intended number of telescopic steps, are provided in one side wall of the outer slider 1 at predetermined intervals to be aligned in the longitudinal direction. On the engagement-recess-formed side wall, an engagement-disabling guide portion 7 (FIG. 2) serving as engagement-impossible-state-creating means is provided on one side of the engagement recesses 6 with respect to the alignment direction of the engagement recesses 6; more specifically, at a position adjacent to the edge of the engagement recess 6d located at one end. That is, a slant surface is formed at the position adjacent to the edge of the engagement recess 6d so as to provide a slope rising upward. Also, an engagement-impossible-state-canceling guide portion 8 is projected on the other side of the engagement recesses 6 with respect to the alignment direction of the engagement recesses 6; more specifically, at a position in proximity to the edge of the engagement recess 6a located at the other end. Further, a pressure reception surface 9 is provided on a side wall that faces the engagement-recess-formed side wall.

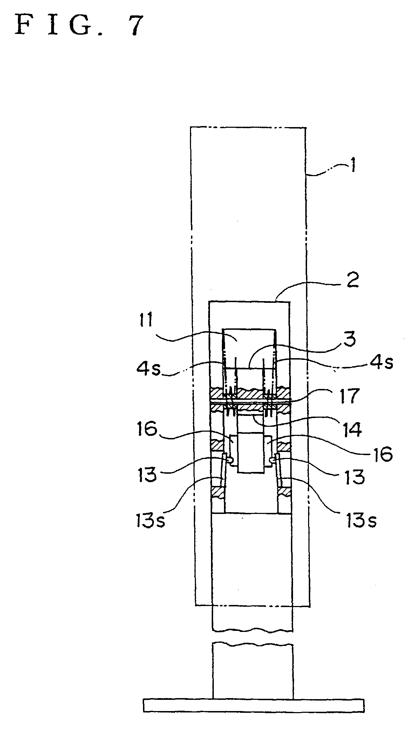

The inner slider 2 is formed to have an outer shape that enables sliding movement of the inner slider 2 within the inner space of the outer slider 1. The inner slider 2 has at the tip-end side thereof an engagement-claw-accommodating space 11 to accommodate the engagement claw 3, which will be described later, as well as a spring accommodating space 12 at the base-end side of the inner slider to accommodate a helical compression spring 5s serving as the extension-direction-urging means 5, which will be also described later. Further, on right and left sides of the engagement-claw-accommodating space 11 (FIG. 7) are provided engagement reception protrusions 13 which serve as an engagement reception portion of engagement-possible-state-maintaining means. The engagement reception protrusions 13 are supported through a structure as in the illustrated example in which the engagement reception protrusions 13 are supported by springs 13s of a leaf-spring-like shape in order to allow the engagement reception protrusions 13 to elastically extend and retract in the direction intersecting the direction of rotation of the engagement claw 3, which will described later, or through a fixed structure.

The engagement claw 3 has a claw 14 at the tip-end side and a pressure contact portion 15 at the base-end side. Further, engagement portions 16―which cooperate with the engagement reception protrusions 13 to form the engagement-impossible-state-maintaining means―are projected from right and left sides of the engagement claw 3 (FIG. 7). The engagement claw 3 is built into the engagement-accommodating space 11 of the inner slider 2 and is rotatably supported by a rotary shaft 17 located in the middle between the claw 14 and the pressure contact portion 15. An engagement-canceling surface 18 serving as engagement-canceling means is provided on the claw 14. When the engagement reception protrusions 13 are fixedly supported as described above, the engagement portion 16 has an elastically deformable structure.

The engagement-urging means 4 is formed from a pair of torsion coil springs 4s, 4s (FIG. 7) as in the illustrated example, or from extension coil springs. The engagement-urging means 4 should be built into to apply a rotational urging force to the engagement claw 3 in a direction of causing the claw 14 of the engagement claw 3 to come into engagement with the engagement recesses 6.

The extension-direction-urging means 5 has a structure in which one end of a helical helical compression spring 5s built into the spring accommodating space 12 of the inner slider 2 is supported by a spring support member 20 fixed to the outer slider 1. While the spring support member 20 serves as a support end, the helical compression spring 5s applies an urging force to the inner slider 2 in a direction such that the inner slider 2 slides relative to the outer slider 1 in the extension direction of the telescopic motion, which will be described later.

The telescopic motion of the stepwise telescopic mechanism according to the first embodiment is effected as follows. For a general operation, the telescopic operation is effected through relative advance sliding between the outer slider 1 and the inner slider 2 (in FIG. 1 indicated by arrow X for the outer slider 1 and by arrow Y for the inner slider 2), or through relative retraction sliding between the outer slider 1 and the inner slider 2 (in FIG. 1 indicated by arrow V for the outer slider 1 and by arrow W for the inner slider 2). The advance slide causes a contraction motion, while the retraction slide causes an extension motion.

A specific operation is effected as follows. FIG. 1 shows a telescopic mechanism in it most contracted state. In this state, the claw 14 of the engagement claw 13 is in engagement with the engagement recess 6d at the end in the advance sliding direction. In the state in which the claw 14 of the engagement claw 3 is in engagement with the engagement recess 6, the pressure contact portion 15 of the engagement claw 3 is in pressure contact with the pressure reception surface 9 of the outer slider 1 while thrusting against the pressure reception surface 9. This pressure contact and the engagement of the claw 14 with the engagement recess 6 restrict sliding in the extension direction against the urging force of the extension-direction-urging means 5. Thus, the length of the telescopic mechanism is maintained constant.

When the outer slider 1 or the inner slider 2 is pushed in an advance sliding direction in this state, the claw 14 comes into pressure contact with the engagement-disabling guide portion 7 provided at a position adjacent to the edge of the engagement recess 6 (FIG. 2). Due to a component of the pressure contact force produced by the above operation, the engagement claw 3 rotates in a disengaging direction. This rotation is continued to an angle where the engagement portions 16 pass over the engagement reception protrusions 13 while retracting the engagement reception protrusions 13. After the engagement portions 16 have passed over the engagement reception protrusions 13, the engagement portions 16 come into engagement with the engagement reception protrusions 13, creating a state such that the urging by the engagement-urging means 4 in the rotational direction is restricted (FIG. 2). In this state, the pressure contact portion 15 of the engagement claw 3 breaks contact with the pressure reception surface 9. Accordingly, no element restricts the urging force of the extension-direction-urging means 5, and therefore the sliders 1 and 2 slide in the extension direction due to the urging force of the extension-direction-urging means 5. As a result, the telescopic mechanism extends to the maximum length.

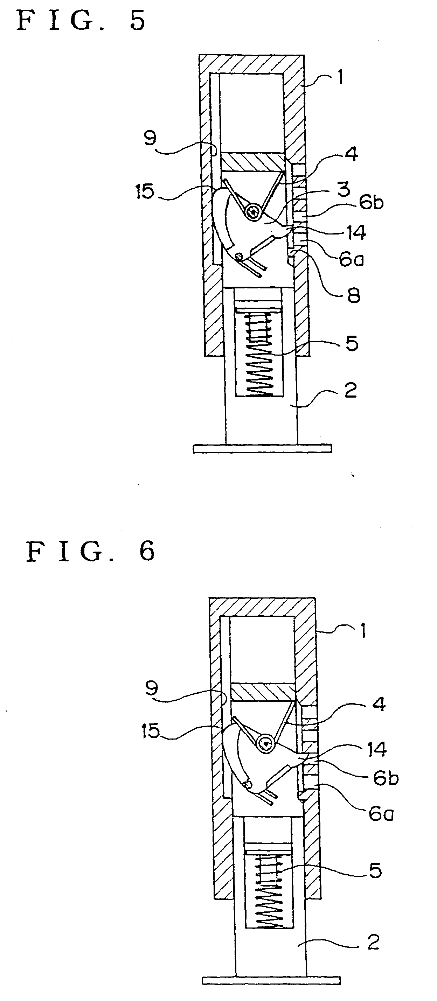

When the telescopic mechanism has extended to the maximum length, the engagement claw 3 comes into pressure contact with the engagement-impossible-state-canceling guide portion 8, which pressure contact causes the engagement claw 3 to rotate in the engaging direction. This rotation continues until the engagement portions 16 pass over the engagement reception protrusions 13 in the direction opposite to the above-described direction while retracting the engagement reception protrusions 13. As a result, due to the urging force of the engagement-urging means 4, the engagement claw 3 comes into engagement with the first engagement recess 6a, so that the telescopic mechanism maintains the length corresponding to the engagement recess 6a (FIG. 4). In this state, when the outer slider 1 or the inner slider 2 is pushed in the advance sliding direction, a component of the pressure contact force produced by means of pressure contact between the engagement-canceling surface 18 of the claw 14 and the inside surface of the engagement recess 6a causes rotation of the engagement claw 3. As a result, the claw 14 of the engagement claw 3 disengages from the engagement recess 6a (FIG. 5) and then comes into engagement with the adjacent engagement recess 6b. Thus, the telescopic mechanism has a length corresponding to the engagement of the claw 14 with the engagement recess 6b (FIG. 6).

### Second Embodiment:

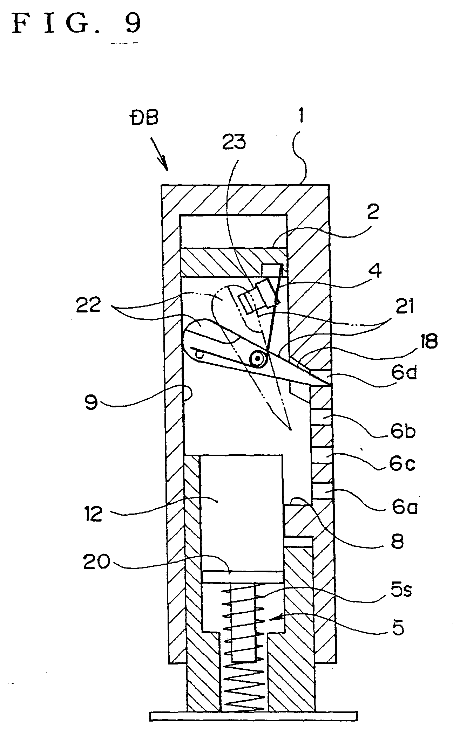

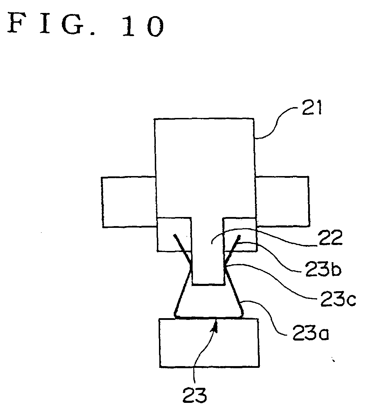

A stepwise telescopic mechanism according to a second embodiment of the present invention is constructed as shown in FIGS. 9 and 10. In the present embodiment, an engagement claw 21 has an engagement portion 22 having a stepped shape as shown in FIG. 10. Further, an engagement reception member 23―which cooperates with the engagement portion 22 to form the engagement-impossible-state-maintaining means―is provided in the engagement-claw-accommodating space 11 of the inner slider 2. The engagement reception member 23 is made of plate material having an elastic property and is formed into a clip-like shape. The engagement reception member 23 has a structure such that a neck 23c is formed between a trapezoidal base end portion 23a and an expanded tip end portion 23b. When the engagement claw 21 comes into pressure contact with the engagement-disabling guide portion 7 and then rotates to a position shown by the double-dot chain line, the engagement portion 22 of the engagement claw 21 expands and enters the neck 23c of the engagement reception member 23 to be held by the engagement reception member 23. Thus, the engagement-impossible state is maintained. The structure of the engagement portion 22 and the structure of the engagement reception member 23 may be reversed. That is, the engagement portion of the engagement claw may be formed to have a clip-like shape similar to that of the engagement reception member 23, while an engagement reception portion having a shape similar to that of the engagement portion 22 may be formed in the engagement-claw-accommodating space. Other structures and the telescopic motion of the present embodiment are the same as those of the first embodiment. Therefore, common portions are denoted by the same reference symbols, and their descriptions are omitted.

### Third Embodiment:

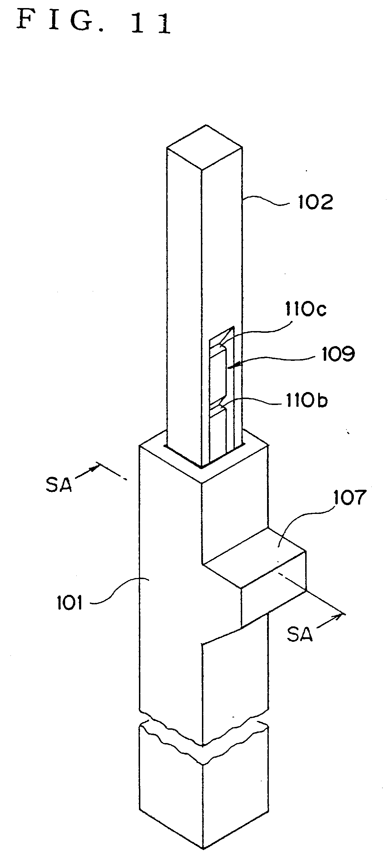

As shown in FIGS. 11 - 14, a stepwise telescopic mechanism according to a third embodiment of the present invention includes, as main elements, an outer slider 101, an inner slider 102, an engagement claw 103, engagement-urging means 104, and extension-direction-urging means 105.

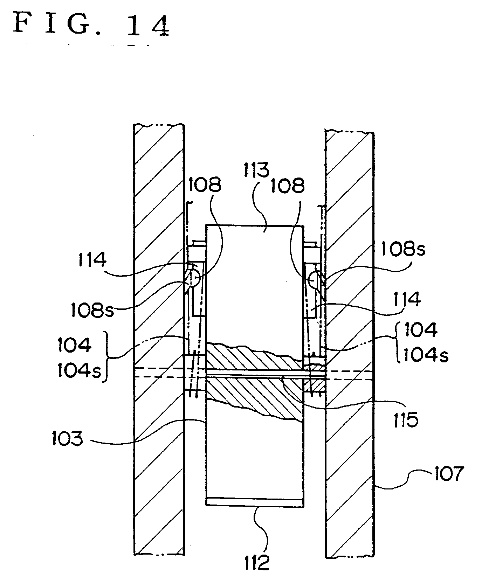

The outer slider 101 may be formed in a rectangular cylindrical shape having a closed end, as in the illustrated example, or in a tubular shape. In the inner surface of the outer slider is formed an engagement-claw-accommodating space 107 which accommodates the engagement claw 103 in an assembly state described below. Further, on right and left sides of the engagement-claw-accommodating space 107 (FIG. 14) are provided engagement reception protrusions 108 which serve as an engagement reception portion of engagement-impossible-state-maintaining means. The engagement reception protrusions 108 are supported through a structure as in the illustrated example in which the engagement reception protrusions 108 are supported by springs 108s of a leaf-spring-like shape in order to allow the engagement reception protrusions 108 to elastically extend and retract in the direction tangent to the rotational direction of the engagement claw 103, which will described later, or through a fixed structure.

The inner slider 102 is formed to have an outer shape that enables sliding movement of the inner slider 102 within the inner space of the outer slider 101. An engagement-recess-forming groove 109 is formed in one side surface, and a plurality of wedge-shaped engagement recesses 110 (110a - 110c), the number of which corresponds to an intended number of telescopic steps, are provided at the bottom of the engagement-recess-forming groove 109 at predetermined intervals to be aligned in the longitudinal direction. A slant surface rising upward is formed, as an engagement-disabling guide portion 111, on one side of the engagement recesses 110 with respect to the alignment direction of the engagement recesses 110; more specifically, at a position adjacent to the edge of the engagement recess 110c located at the end of the engagement-recess-forming groove 109.

The engagement claw 103 has a claw 112 at the tip-end side and a pressure contact portion 113 at the base-end side. Further, engagement portions 114―which cooperate with the engagement reception protrusions 108 to form the engagement-impossible-state-maintaining means―are projected from right and left sides of the engagement claw 103 (FIG. 14). The engagement claw 103 is built into the engagement-claw-accommodating space 107 of the inner slider 102 and is rotatably supported by a rotary shaft 115 located halfway between the claw 112 and the pressure contact portion 113. When the engagement reception protrusions 108 are fixedly supported as described above, the engagement portion 114 has an elastically deformable structure.

The engagement-urging means 104 is formed from a pair of torsion coil springs 104s, 104s (FIG. 14) as in the illustrated example, or from extension coil springs. The engagement-urging means 104 is built into so as to apply a rotational urging force to the engagement claw 103 in a direction of causing the claw 112 of the engagement claw 103 to come into engagement with the engagement recesses 110.

The extension-direction-urging means 105 has a structure such that one end of a helical compression spring 117 is connected to a pressure contact member 116 and the other end of the helical compression spring 117 is supported by the closed end of the outer slider 101. Thus, the helical compression spring 117 applies an urging force to the inner slider 102 in a direction such that the inner slider 102 slides relative to the outer slider 101 in the extension direction of the telescopic motion, which will be described later.

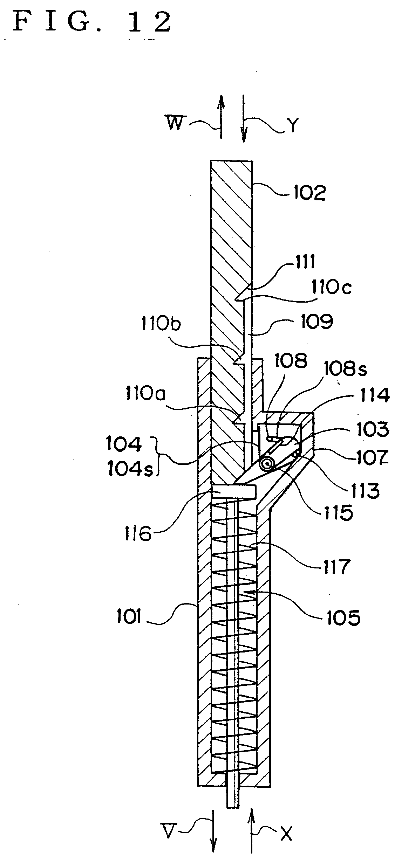

The telescopic motion of the stepwise telescopic mechanism according to the present embodiment is effected as follows. For a general operation, the telescopic operation is effected through relative advance sliding between the outer slider 101 and the inner slider 102 (in FIG. 12 indicated by arrow X for the outer slider 101 and by arrow Y for the inner slider 102), or through relative retraction sliding between the outer slider 101 and the inner slider 102 (in FIG. 12 indicated by arrow V for the outer slider 101 and by arrow W for the inner slider 102).

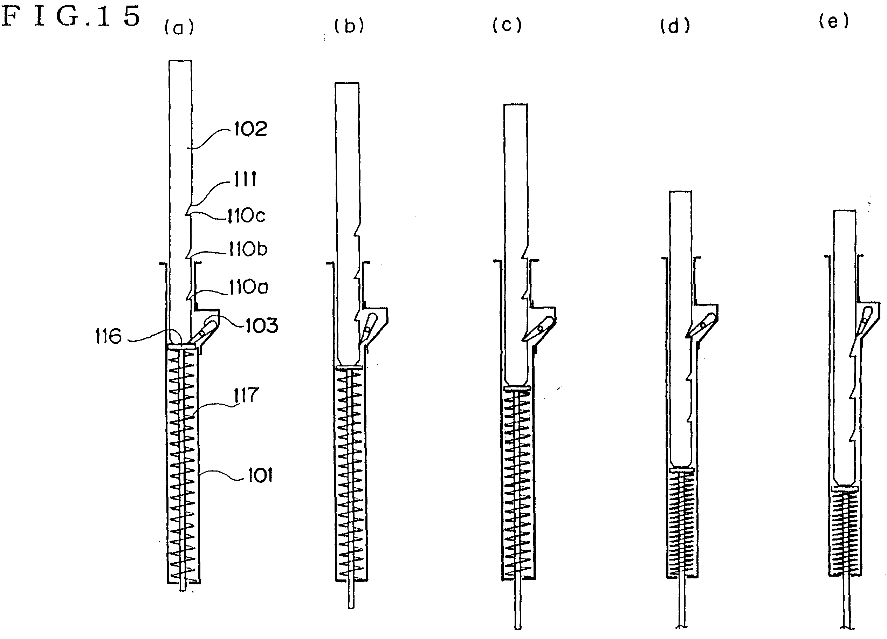

A specific operation is effected as follows. FIGS 12 and 15(a) show the most extended state of the telescopic mechanism. In this state, there is canceled the state in which the urging operation of the engagement-urging means 104 for urging the engagement claw 103 in the engaging direction is restricted by the engagement-impossible-state-maintaining means as described below. This cancellation is performed by means of rotation of the engagement claw 103 in the engaging direction caused by pressure contact of the pressure contact member 116. After the cancellation has been completed, the engagement claw 103 presses its claw 112 against the end portion of the inner slider 102, and presses the pressure contact portion 113 against the inner surface of the engagement-claw-accommodating space 107, such that the pressure contact portion 113 thrusts against the inner surface, in a same manner as in the engagement with the engagement recess 110, which will be described later. Thus, the engagement claw 103 can sustain the urging force of the helical compression spring 117 of the extension-direction-urging means 105.

When the outer slider 101 or the inner slider 102 is pushed in the advance sliding direction in this state, the sliders advance relative to each other (FIG 15(b)) in a state in which the tip end of the claw 112 of the engagement claw 103 is in pressure contact with the bottom of the engagement-recess-forming groove 109 of the outer slider 101 (in the same state as that shown by the double-dot chain line in FIG. 12). When the claw 112 of the engagement claw 103 reaches the first engagement recess 110a, the claw 112 rotates toward and comes into engagement with the first engagement recess 110a by means of the urging force of the engagement-urging means 104. In the state in which the claw 112 of the engagement claw 103 is in engagement with any of the first engagement recess 110 (110a - 110c), the pressure contact portion 113 of the engagement claw 103 is in contact with the inner surface of the engagement-claw-accommodating space 107 while thrusting against the inner surface. This pressure contact and the engagement of the claw 112 with the engagement recess 110 restrict sliding in the extension direction against the urging force of the extension-direction-urging means 105. Thus, the length of the telescopic mechanism is maintained constant (FIG. 15(c)).

When the outer slider 101 or the inner slider 102 is further pushed in the advance sliding direction in this state, the engagement claw 103 rotates in the disengaging direction due to a component of the pressure contact force produced by means of pressure contact between the outer surface of the claw 112 and the inner surface of the engagement recess 110a serving as an engagement-canceling surface. As a result, the claw 112 of the engagement claw 103 disengages from the engagement recess 110a, as shown by the double-dot chain line in FIG. 12, and then comes into engagement with the adjacent engagement recess 110b. Thus, the telescopic mechanism has a length corresponding to the engagement of the claw 112 with the engagement recess 110b.

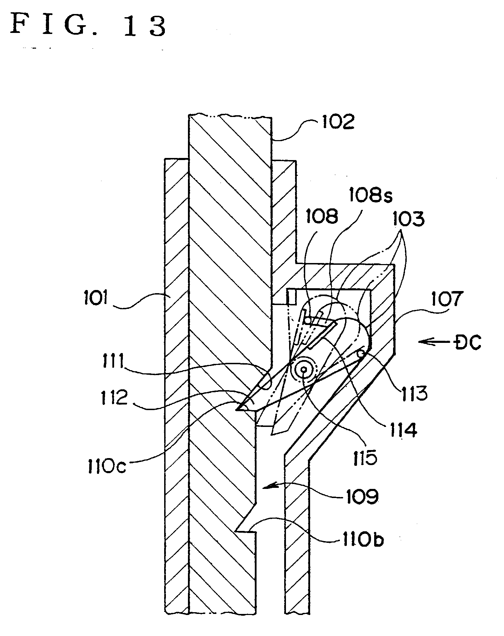

In this manner, the telescopic mechanism contracts stepwise. When the outer slider 101 or the inner slider 102 is pushed in the advance sliding direction in the state in which the claw 112 of the engagement claw 103 is in engagement with the engagement recess 110c located at the end in the advance sliding direction; the most contracted state, the claw 112 comes into pressure contact with the engagement-disabling guide portion 111 adjacent to the edge of the engagement recess 110 (FIGS. 13 and 15(b)). Due to a component of the pressure contact force produced by the above operation, the engagement claw 103 rotates in the disengaging direction. This rotation is continued to an angle where the engagement portions 114 of the engagement claw 103 passes over the engagement reception protrusions 108 while retracting the engagement reception protrusions 108. After the engagement portions 114 has passed over the engagement reception protrusions 108, the engagement portions 114 come into engagement with the engagement reception protrusions 108, creating a state in which the urging by the engagement-urging means 104 in the rotational direction is restricted (shown by the single-dot chain line in FIG. 13). In this state, the pressure contact portion 113 of the engagement claw 103 breaks contact with the inner surface of the engagement-claw-accommodating space 107. Accordingly, no element restricts the urging force of the extension-direction-urging means 105, and therefore the sliders 101 and 102 slide in the extension direction due to the urging force of the extension-direction-urging means 105. As a result, the telescopic mechanism extends to the maximum length, as shown in FIG. 15(a).

When the telescopic mechanism has extended to the maximum length, the pressure contact member 116 comes into pressure contact with the engagement claw 103 while receiving the urging force of the helical compression spring 117, so that the engagement claw 103 rotates in the engaging direction. This rotation continues until the engagement portions 114 of the engagement claw 103 pass over the engagement reception protrusions 108 in the direction opposite to the above-described direction while retracting the engagement reception protrusions 108. As a result, the engagement claw 103 is allowed to rotate in the engaging direction.

### Fourth Embodiment:

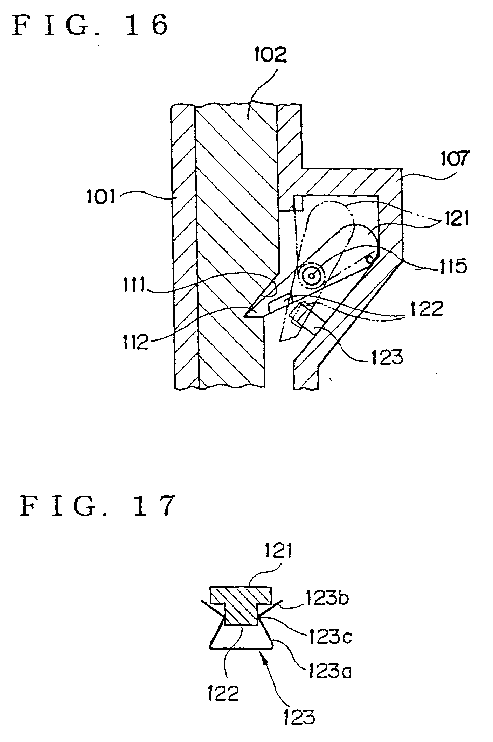

A stepwise telescopic mechanism according to a fourth embodiment of the present invention is constructed as shown in FIGS. 16 and 17. In the present embodiment, an engagement claw 121 has an engagement portion 122 having a stepped shape as shown in FIG. 17. Further, an engagement reception member 123―which cooperates with the engagement portion 122 to form the engagement-impossible-state-maintaining means―is provided in the engagement-claw-accommodating space 107 of the outer slider 101. The engagement reception member 123 is made of plate material having an elastic property and is formed into a clip-like shape. The engagement reception member 123 has a structure such that a neck 123c is formed between a trapezoidal base end portion 123a and an expanded tip end portion 123b. When the engagement claw 121 comes into pressure contact with the engagement-disabling guide portion 111 and then rotates to a position shown by the double-dot chain line, the engagement portion 122 of the engagement claw 121 expands and enters the neck 123c of the engagement reception member 123 to be held by the engagement reception member 123. Thus, the engagement-impossible-state is maintained. Other structures and the telescopic motion of the present embodiment are the same as those of the third embodiment. Therefore, common portions are denoted by the same reference symbols, and their descriptions are omitted.

### Fifth Embodiment:

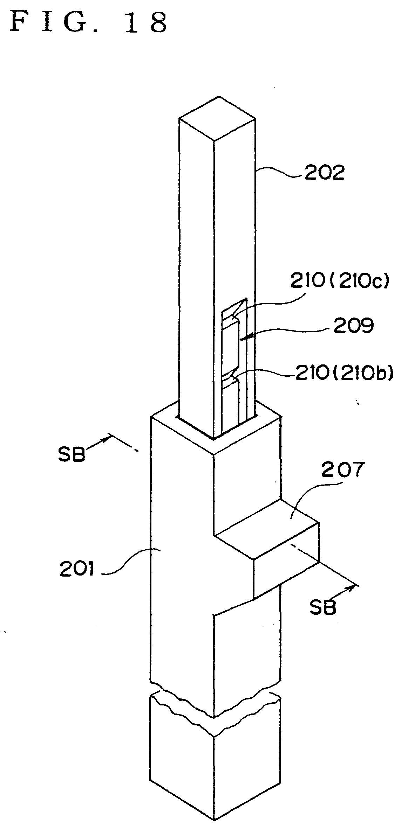

As shown in FIGS. 18 - 21, a stepwise telescopic mechanism according to a fifth embodiment of the present invention includes, as main elements, an outer slider 201, an inner slider 202, an engagement claw 203, engagement-urging means 204, and extension-direction-urging means 205.

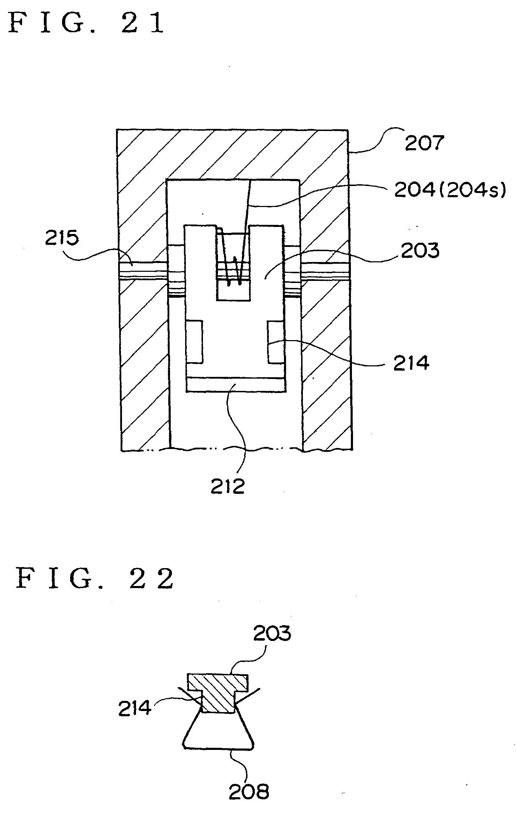

In the inner surface of the outer slider 201 is formed an engagement-claw-accommodating space 207 which accommodates the engagement claw 203 in an assembly state described below. Further, an engagement reception member 208 is provided in the engagement-claw-accommodating space 207 of the outer slider 201. The engagement reception member 208 has a clip-like shape as shown by an enlarged view in FIG. 22.

The inner slider 202 is formed to have an outer shape that enables sliding movement of the inner slider 202 within the inner space of the outer slider 201. An engagement-recess-forming groove 209 is formed in one side surface, and a plurality of wedge-shaped engagement recesses 210 (210a - 210c), the number of which corresponds to an intended number of telescopic steps, are provided at the bottom of the engagement-recess-forming groove 209 at predetermined intervals to be aligned in the longitudinal direction. A slant surface rising upward is formed, as an engagement-disabling guide portion 211, on one side of the engagement recesses 210 with respect to the alignment direction of the engagement recesses 210; more specifically, at a position adjacent to the edge of the engagement recess 210c located at the end of the engagement-recess-forming groove 209. Further, at the tip end of the inner slider 202, there is formed a slant surface 202f having an inclination corresponding to the wedge shape of the engagement recesses 210.

The engagement claw 203 has a claw 212 at the tip end, and an engagement portion 214 is provided in the vicinity of the claw 212. The engagement portion 214 has a stepped shape as shown in FIGS. 21 and 22. The engagement claw 203 is built into the engagement-accommodating space 207 of the outer slider 201 and is rotatably supported by a rotary shaft 215 passed through the base end portion of the engagement claw 203.

The engagement-urging means 204 is formed from a torsion coil spring 204s (FIG. 21) as in the illustrated example, or from an extension coil spring. The engagement-urging means 204 is built into so as to apply a rotational urging force to the engagement claw 203 in a direction of causing the claw 212 of the engagement claw 203 to come into engagement with the engagement recesses 210.

The extension-direction-urging means 205 has a structure such that one end of a helical compression spring 217 is connected to a pressure contact member 216 and the other end of the helical compression spring 217 is supported by the closed end of the outer slider 201. Thus, the helical compression spring 217 applies an urging force to the inner slider 202 in a direction such that the inner slider 202 slides relative to the outer slider 201 in the extension direction of the telescopic motion, which will be described later.

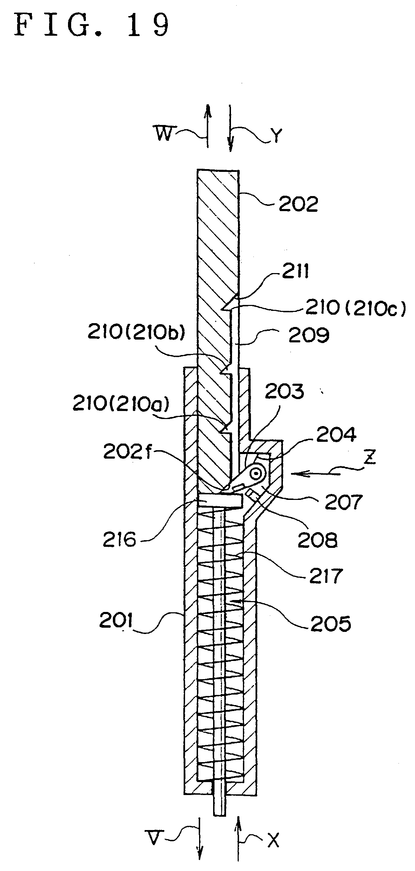

The telescopic motion of the stepwise telescopic mechanism according to the present embodiment is effected as follows. For a general operation, the telescopic operation is effected through relative advance sliding between the outer slider 201 and the inner slider 202 (in FIG. 19 indicated by arrow X for the outer slider 201 and by arrow Y for the inner slider 202), or through relative retraction sliding between the outer slider 201 and the inner slider 202 (in FIG. 19 indicated by arrow V for the outer slider 201 and by arrow W for the inner slider 202). The advance slide causes a contraction motion, while the retraction slide causes an extension motion.

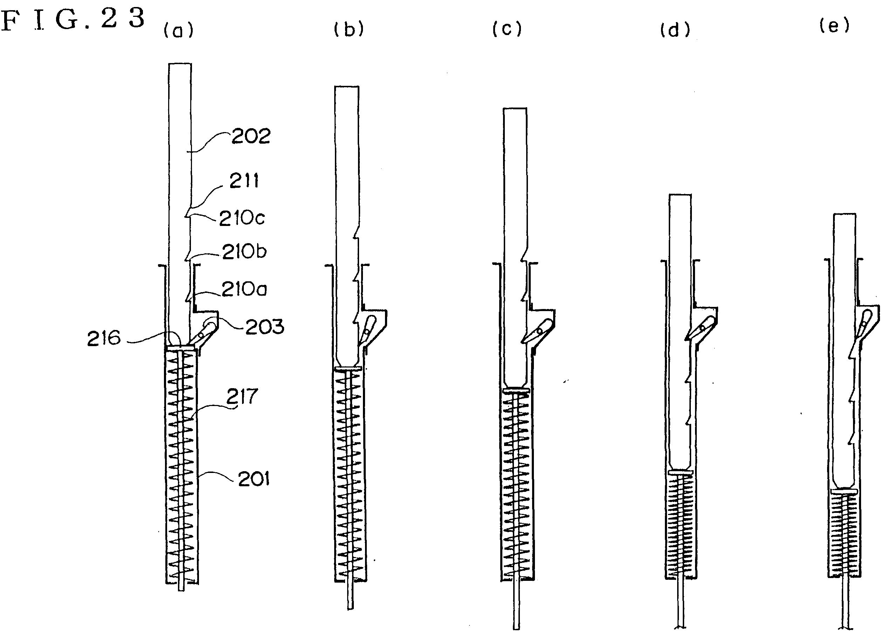

A specific operation is effected as follows. FIGS. 19 and 23(a) show the telescopic mechanism in its most extended state. In this state, there is canceled the state in which the urging operation of the engagement-urging means 204 for urging the engagement claw 203 in the engaging direction is restricted by the engagement-impossible-state-maintaining means as described below. This cancellation is performed by means of rotation of the engagement claw 203 in the engaging direction caused by pressure contact of the pressure contact member 216. After the cancellation has been completed, the claw 212 of the engagement claw 203 enters a depression formed by the slant end surface 202f at the tip end of the inner slider 202 and the upper surface of the pressure contact member 216. When the urging force of the helical compression spring 217 acts on the engagement claw 203 in this state, the engagement claw 203 receives an urging force to turn upward in FIGS. 19 and 23(a), and due to this urging force, the inner slider 202 is pressed against the inner surface of the outer slider 201. That is, when the engagement claw 203 is about to turn upward, the engagement claw 203 presses the inner slider 202 as illustrated by arrow Z in FIG. 19 in order to press the inner slider 202 against the inner surface of the outer slider 201, because the tip end of the engagement claw 203 has an arcuate turning locus. As a result, the inner slider 202 and the outer slider 201 maintain the engaged state against the urging force of the helical compression spring 217.

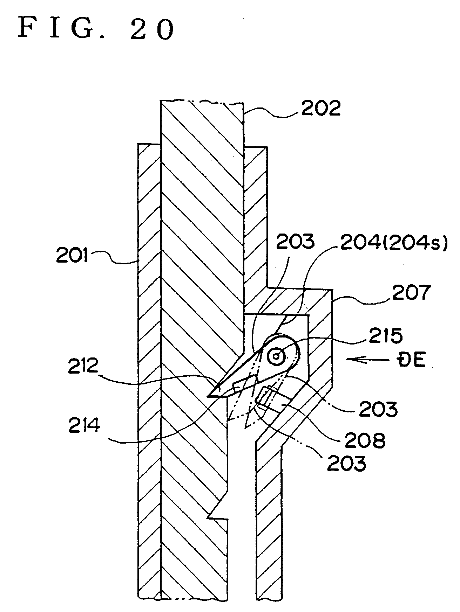

When the outer slider 201 or the inner slider 202 is pushed in the advance sliding direction in this state, the sliders advance relative to each other (FIG. 23(b)) in a state in which the tip end of the claw 212 of the engagement claw 203 is in pressure contact with the bottom of the engagement-recess-forming groove 209 of the outer slider 201 (in the same state as that shown by the double-dot chain line in FIG. 20). When the claw 212 of the engagement claw 203 reaches the first engagement recess 210a, the claw 212 comes into engagement with the first engagement recess 210a by means of the rotational urging force of the engagement-urging means 204. In the state in which the claw 212 of the engagement claw 203 is in engagement with any of the first engagement recess 210 (210a - 210c), the engagement claw 203 presses the inner slider 202 against the inner surface of the outer slider 201, as in a manner similar to that described with reference to FIGS. 19 and 23(a). With this operation, the inner slider 202 and the outer slider 201 are brought into a fixed state against the urging force of the helical compression spring 217. That is, the slide in the extension direction is restricted against the urging force of the helical compression spring 217, so that the constant length is maintained (FIG. 23(c)).

When the outer slider 201 or the inner slider 202 is further pushed in the advance sliding direction in this state, the engagement claw 203 rotates in the disengaging direction due to a component of the pressure contact force produced by means of pressure contact between the outer surface of the claw 212 and the inner surface of the engagement recess 210a serving as an engagement-canceling surface. As a result, the claw 212 of the engagement claw 203 disengages from the engagement recess 210a, as shown by the double-dot chain line in FIG. 20, and then comes into engagement with the adjacent engagement recess 210b. Thus, the telescopic mechanism has a length corresponding to the engagement recess 210b.

In this manner, the telescopic mechanism contracts stepwise. When the outer slider 201 or the inner slider 202 is pushed in the advance sliding direction in the state in which the claw 212 of the engagement claw 203 is in engagement with the engagement recess 210c located at the end in the advance sliding direction; i.e., the most contracted state, the engagement claw 203 comes into pressure contact with the engagement-disabling guide portion 211 adjacent to the edge of the engagement recess 210 (FIGS. 20 and 23(d)). Due to a component of the pressure contact force caused by the above operation, the engagement claw 203 rotates in the disengaging direction in a large amount. This rotation causes the engagement portion 214 of the engagement claw 203 to engage the engagement reception protrusions 208 (shown by the single-dot chain line in FIG. 20). In this state, no element restricts the urging force of the helical compression spring 217, and therefore the sliders 201 and 202 automatically slide in the retraction direction due to the urging force of the helical compression spring 217. As a result, the telescopic mechanism extends to the maximum length as shown in FIG. 23(a).

When the telescopic mechanism has extended to the maximum length, the pressure contact member 216 comes into pressure contact with the engagement claw 203 while receiving the urging force of the helical compression spring 217, so that the engagement claw 203 rotates in the engaging direction. Due to this rotation, the engagement portions 214 of the engagement claw 203 disengages from the engagement reception protrusions 208. As a result, the engagement claw 203 is allowed to rotate in the engaging direction by the urging force of the engagement-urging means 204.

### Sixth Embodiment:

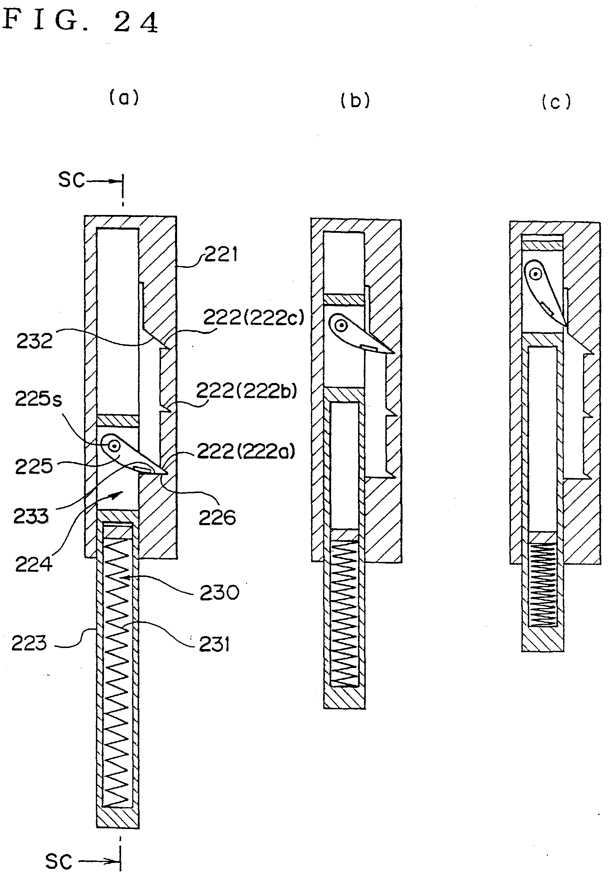

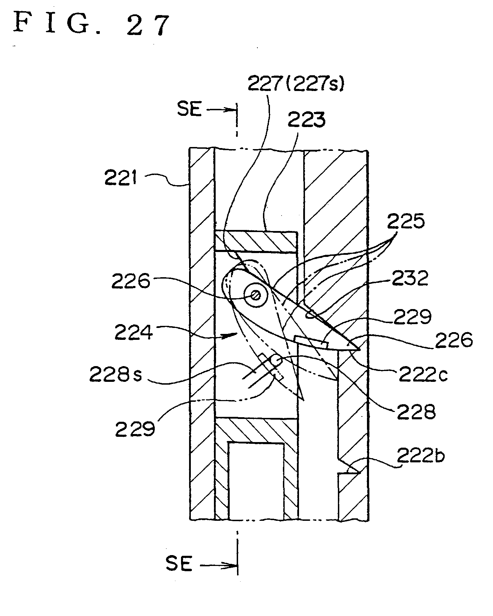

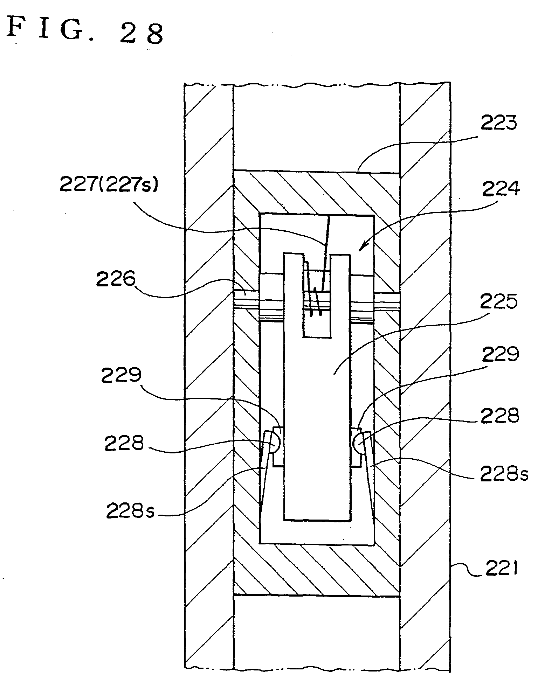

A stepwise telescopic mechanism according to a sixth embodiment of the present invention is constructed as shown in FIGS. 24 and 28. In the present embodiment, engagement recesses 222 (222a - 222c) are provided in an outer slider 221. Meanwhile, an engagement-claw-accommodating space 224 is provided in an inner slider 223 in order to accommodate an engagement claw 225. As in the above-described embodiments, the engagement claw 225 has a claw 226 at its tip end and has a structure to rotate about a rotational shaft 225s passed through the base end portion of the engagement claw 225. Rotational urging force is applied to the engagement claw 225 by a torsion coil spring 227s (FIGS. 27 and 28) serving as engagement-urging means 227.

Further, on right and left side inner surfaces of the engagement-claw-accommodating space 224 (FIG. 28) are provided engagement reception protrusions 228 which serve as an engagement reception portion of engagement-impossible-state-maintaining means. The engagement reception protrusions 228 are supported through a structure as in the illustrated example in which the engagement reception protrusions 228 are supported by springs 228s of a leaf-spring-like shape in order to allow the engagement reception protrusions 228 to elastically extend and retract in the direction intersecting the rotational direction of the engagement claw 225, which will described later, or through a fixed structure. In order to correspond to the engagement reception protrusions 228, engagement portions 229―which cooperate with the engagement reception protrusions 228 to form the engagement-impossible-state-maintaining means―are projected from right and left sides of the engagement claw 225 (FIG. 28).

The telescopic motion of the stepwise telescopic mechanism according to the present embodiment is basically the same as that of the stepwise telescopic mechanism according to the fifth embodiment. Specifically, in the most extended state shown in FIG. 24(a), the engagement claw 225 is in engagement with the engagement recess 222a at the end of the outer slider 221. As a result, the inner slider 223 and the outer slider 221 maintain the engaged state against the urging force of the helical compression spring 231 of extension-direction-urging means 230. This operation is the same as that described in relation to the fifth embodiment.

When the outer slider 221 or the inner slider 223 is pushed in the advance sliding direction in this state, the engagement claw 222 causes its claw 226 to successively engage the engagement recesses 222b and 222c. As a result, the telescopic mechanism contracts and maintains its length in the contracted state.

In this manner, the telescopic mechanism contracts stepwise. When the outer slider 221 or the inner slider 223 is pushed in the advance sliding direction in the state in which the claw 226 of the engagement claw 225 is in engagement with the engagement recess 222c located at the end in the advance sliding direction; i.e., the most contracted state (FIG. 24(b)), the engagement claw 225 comes into pressure contact with the engagement-disabling guide portion 32 adjacent to the edge of the engagement recess 220 (FIGS. 24(b) and 27). Due to a component of the pressure contact force developed by the above operation, the engagement claw 225 rotates in the disengaging direction in a large amount (FIG. 24(c)). This rotation is continued to an angle where the engagement portions 229 of the engagement claw 225 passes over the engagement reception protrusions 228 while retracting the engagement reception protrusions 228. After the engagement portions 229 has passed over the engagement reception protrusions 228, the engagement portions 229 come into engagement with the engagement reception protrusions 228, creating a state in which the urging by the engagement-urging means 227 in the rotational direction is restricted (shown by the single-dot chain line in FIG. 27). In this state, no element restricts the urging force of the engagement-urging means 227, and therefore the sliders 221 and 223 are automatically slid in the retraction direction by the urging force of the engagement-urging means 227. As a result, the telescopic mechanism returns to its most extended state as shown in FIG. 24(a).

When the telescopic mechanism has extended to the maximum length, the engagement claw 225―which receives the urging force of the helical compression spring 231―comes into pressure contact with a pressure contact stepped portion 233 which is provided, as an engagement-impossible-state-canceling guide portion, on the outer slider 221 such that the pressure contact stepped portion 233 is continuous with the engagement recess 222a located at the end. Due to this pressure contact, the engagement claw 225 rotates in the engaging direction. Due to this rotation, the engagement portions 229 of the engagement claw 225 disengages from the engagement reception protrusions 228. As a result, the engagement claw 225 is allowed to rotate in the engaging direction by the urging force of the engagement-urging means 227.

### Seventh Embodiment:

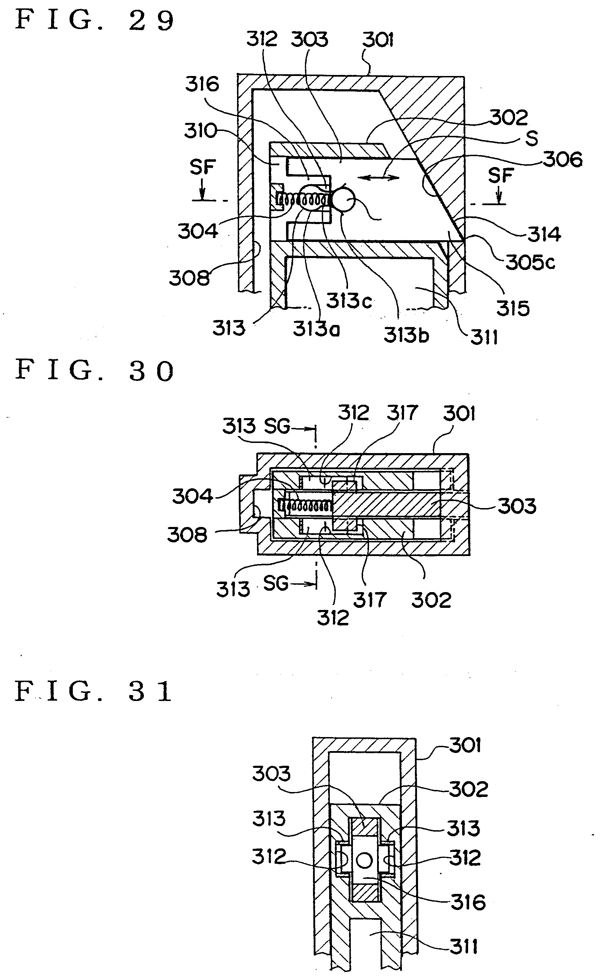

As shown in FIGS. 29 - 35, a stepwise telescopic mechanism according to a seventh embodiment of the present invention includes, as main elements, an outer slider 301, an inner slider 302, an engagement claw 303, engagement-urging means 304, and extension-direction-urging means (not illustrated), as in the first embodiment.

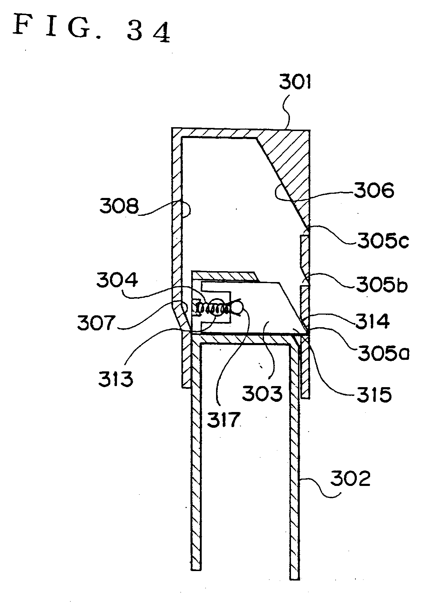

The outer slider 301 has a rectangular cylindrical structure which is basically the same as that of the first embodiment. That is, a plurality of engagement recesses 305 (305a, 305b, 305c) are provided, and an engagement-disabling guide portion 306 serving as engagement-impossible-state-creating means and an engagement-impossible-state-canceling guide portion 307 serving as engagement-impossible-state-canceling means are also disposed (FIG. 34). However, the portion of the outer slider 1 used as the pressure reception surface 9 in the first embodiment is replaced with a base end restriction surface 308 of the engagement claw 303, which will be described later.

Like the inner slider 2 in the first embodiment, the inner slider 302 has an engagement-claw-accommodating space 310 at the tip-end side to accommodate the engagement claw 303, as well as a spring accommodating space 311 at the base-end side to accommodate a compression spring (not illustrated), which serves as the extension-direction-urging means as in the first embodiment. Further, guide grooves 312 are formed in right and left sides inner surfaces of the engagement-claw-accommodating space 310 (FIGS. 30 and 31), and engagement reception members 313 serving as engagement reception portions are provided at the ends of the guide grooves 312. As in the second embodiment, the engagement reception members 313 are made of a plate material having an elastic property and is formed into a clip-like shape. The engagement reception members 313 have a structure such that a neck 313c is formed between a circular base end portion 313a and an expanded tip end portion 313b.

The engagement claw 303 has a claw 315 at its tip end, and a cutaway portion 316 at its base end. The claw 315 has an engagement-canceling surface 314 serving as engagement-canceling means, thereby forming a wedge shape. Further, engagement projections 317 are projected from right and left side-surfaces of the engagement claw 303 to be located adjacent to the cutaway portion 316. The engagement projections 317 serve as engagement portions which cooperate with the engagement reception members 313 to form the engagement-impossible-state-maintaining means. The engagement claw 303 is built into the engagement-claw-accommodating space 310 of the inner slider 302 such that the engagement claw 303 is slidable in the direction of arrow S.

The engagement-urging means 304 is formed of a helical compression spring, and is built to apply slide urging force to the engagement claw 303 in the direction of bringing the claw 315 into engagement with the engagement recesses 305.

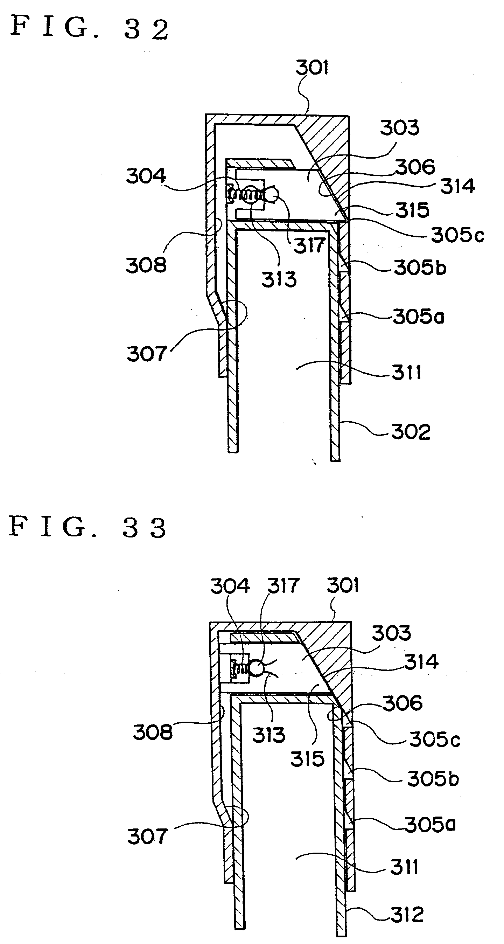

The overall telescopic operation of the stepwise telescopic mechanism according to the present embodiment is the same as that of the first embodiment. Specifically, when the telescopic mechanism is operated from its most contracted state as shown in FIG. 32, the telescopic mechanism operates as follows. In this most contracted state, since the claw 315 of the engagement claw 303 is in engagement with the engagement recess 305c located at the end in the advance sliding direction, slide in the extension direction is restricted against the urging force of expansion-direction-urging means (not illustrated) similar to the expansion-direction-urging means 5 shown in FIG. 1 relating to the first embodiment. Thus, the length of the telescopic mechanism is maintained constant.

When the outer slider 301 or the inner slider 302 is pushed in the advance sliding direction in this state, the claw 315 comes into pressure contact with the engagement-disabling guide portion 306 provided at a position adjacent to the edge of the engagement recess 305c. Due to a component of the pressure contact force produced by the above operation, the engagement claw 303 slides in the disengaging direction (FIG. 33). This slide movement is continued until the engagement projections 317 expands and enters the engagement reception members 313 of the inner slider 302 and is then held by the engagement reception members 313. At the same tune, the base end of the engagement claw 303 abuts the base end restriction surface 308. As a result, there is created a state in which no element restricts the urging force of the extension-direction-urging means, so that the sliders 301 and 302 slide in the retraction direction by the urging force of the extension-direction-urging means. Thus, the telescopic mechanism extends to the maximum length.

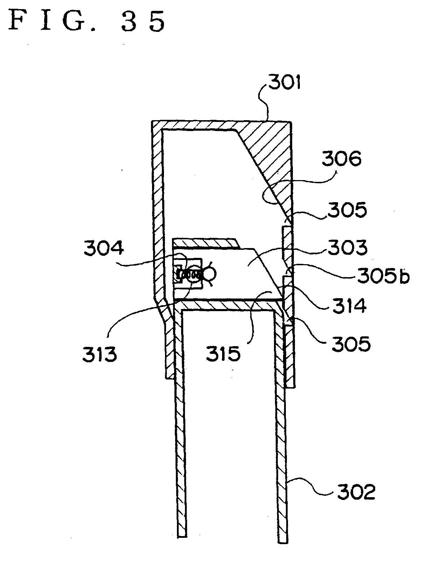

When the telescopic mechanism has extended to the maximum length, the engagement claw 303 comes into pressure contact with the engagement-impossible-state-canceling guide portion 307. Due to a component of the pressure contact force produced by the pressure contact, the engagement claw 303 slides in the engaging direction, and the engagement projections 317 disengage from the engagement reception members 313 (FIG. 34). As a result, the engagement claw 303 comes into engagement with the engagement recess 305a due to the urging force of the engagement-urging means 304, so that the telescopic mechanism maintains the length corresponding to the engagement recess 305a. In this state, when the outer slider 301 or the inner slider 302 is pushed in the advance sliding direction, a component of the pressure contact force produced by means of pressure contact between the engagement-canceling surface 314 of the claw 315 and the inside surface of the engagement recess 305a causes slide of the engagement claw 303. As a result, the claw 315 of the engagement claw 303 disengages from the engagement recess 305a (FIG. 35) and then comes into engagement with the adjacent engagement recess 305b. Thus, the telescopic mechanism has a length corresponding to the engagement of the claw 315 with the engagement recess 305b.

### Eighth Embodiment:

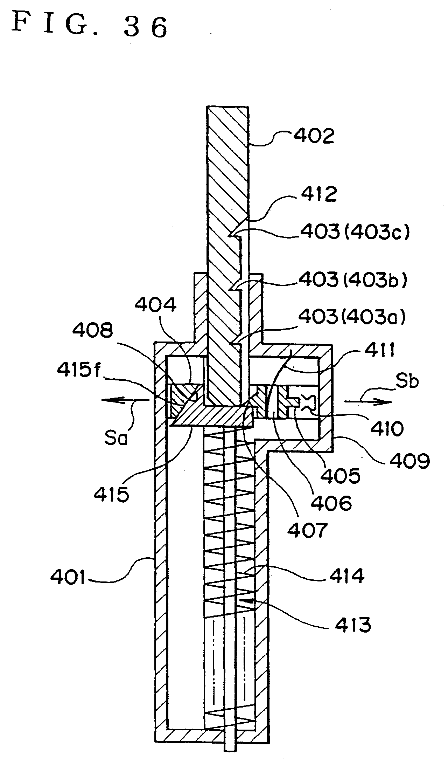

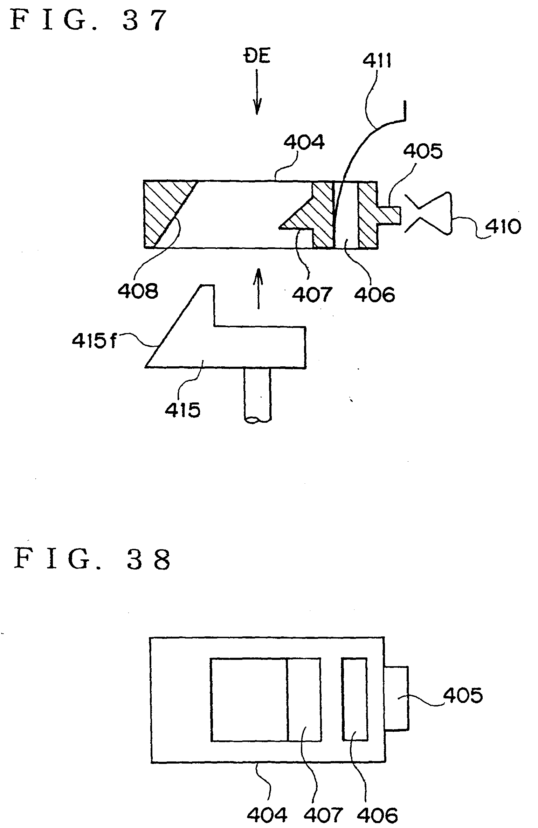

As shown in FIG. 36, a stepwise telescopic mechanism according to an eighth embodiment of the present invention has an engagement claw 404 which is slidable in directions (a direction indicated by arrow Sa and a direction indicated by arrow Sb) perpendicularly intersecting the direction of relative slide between the outer slider 401 and the inner slider 402 and which establishes and cancels engagement with engagement recesses 403 (403a - 403c) of the inner slider 402 through the slide movement. As is shown by enlarged views in FIGS. 37 and 38, the engagement claw 404 has an engagement portion 405, a spring reception hole 406, a claw 407, and a pressure reception surface 408 in this sequence from the base end side, and a flat-parallelepipedous overall shape.

The engagement claw 404 is built into an engagement-claw-accommodating space 409 provided in the outer slider 401. In the engagement-claw-accommodating space 409, there is provided an engagement reception member 410, which is paired with the engagement portion 405 of the engagement claw 404 to constitute engagement-impossible-state-maintaining means. The an engagement reception member 410 has a clip-like structure as in the first embodiment.

Except the operation of the engagement claw 404, the telescopic operation of the stepwise telescopic mechanism according to the present embodiment is the same as that of the stepwise telescopic mechanism according to the seventh embodiment. The engagement and disengagement of the engagement claw 404 with respect to the engagement recesses 403 are effected through the slide motion as shown by arrows Sa and Sb. This slide motion is produced by the urging force of the engagement-urging means (specifically, a leaf spring) 411 for urging the engagement claw 404 via the spring receiving hole 406 in the engaging direction (the direction of arrow Sa), and by a component of a pressure contact force that is generated due to pressure contact of the outer surface of the claw 407 with the inner surface of the engagement recess 403 when the outer slider 401 or the inner slider 402 is pressed in the advance sliding direction.

As in the fifth embodiment, an engagement-disabling guide member 412 provided on the inner slider 402 brings the engagement claw 404 into the engagement-impossible state. That is, when the outer slider 401 or the inner slider 402 is further pressed in the advance sliding direction in its most contracted state, the claw 407 of the engagement claw 404 comes into pressure contact with the engagement-disabling guide member 412. With this operation, the engagement claw 404 slides in the disengaging direction (the direction of arrow Sb) to a position where the tip end of the claw 407 disengages from the outer surface of the inner slider 402. This sate of being slid in the disengaging direction is maintained by inserting the engagement portion 405 into the engagement reception member 410. While this state is maintained, the inner slider 402 is automatically slide in the retraction direction by the urging force of the helical compression spring 414 of the extension-direction-urging means 413, so that the telescopic mechanism returns to its most-extended state (the state shown in FIG. 36).

When the telescopic mechanism returns to this state, a pressure contact surface 415f of the pressure contact member 415 provided at the tip end of the extension-direction-urging means 413 comes into pressure contact with the pressure reception surface 408. Due to a component force produced by this operation, the engagement claw 404 slides in the engaging direction (the direction of arrow Sa), so that the engagement portion 405 disengages from the engagement reception member 410. As a result, the engagement claw 404 is allowed to slide in the engaging direction by the urging force of the engagement-urging means 411.

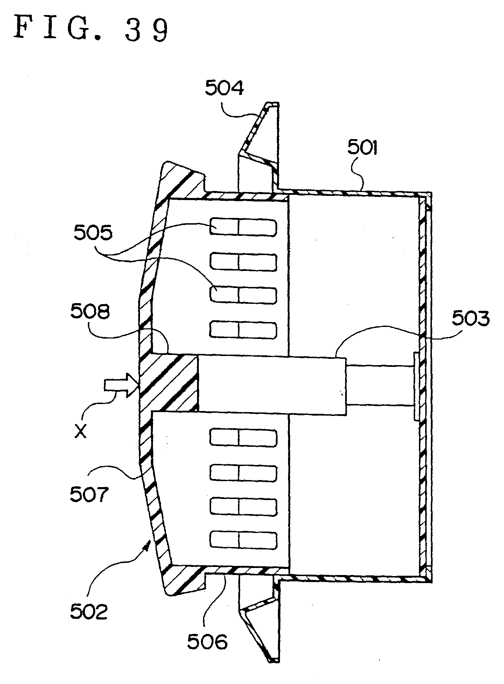

Next, a description will be given of examples of applications of the stepwise telescopic mechanism according to the above-described embodiments. One example of the applications is an ventilation apparatus. As shown in FIG. 39, the ventilation apparatus according to this example comprises, as main elements, a ventilation passage member 501, an opening-adjustment member 502, and operation means 503 constituted by use of the stepwise telescopic mechanism according to any one of the above-described embodiments.

The ventilation passage member 501 is formed into a short cylindrical shape whose interior serves as a ventilation passage, and a decoratively bent frame 504 is provided at the front end. The opening-adjustment member 502 includes a cylindrical portion 506 having a plurality of ventilation openings 505 in the side surface, a face portion 507 for decoration purpose, and a connection portion 508 projected from the center of the face portion 507. The opening-adjustment member 502 is slidably inserted into the ventilation passage member 501, and the members 502 and 501 are connected with each other via the operation means 503.

In the ventilation apparatus, when the opening-adjustment member 502 is pressed as shown by arrow X, the operation means 503 extends and contracts stepwise in a manner described in relation to the respective embodiments. With this operation, the ventilation openings 505 of the opening-adjustment member 502 are closed or, the closed state is canceled. Thus, the degree of opening of the ventilation passage of the ventilation passage member 501 is adjusted.

Next, a description will be given of an example in which the stepwise telescopic mechanism according to the above-described embodiments is applied to a headrest of an automobile. In this case, as shown in FIG. 9. two paired operation means 511 utilizing the stepwise telescopic mechanism according to the above-described embodiments are built into a seat back 510, and a headrest 512 is supported by the operation means 511.

### INDUSTRIAL APPLICABILITY

As described above, the stepwise telescopic mechanism according to the present invention enables multi-step telescopic motion to be effected through a single operation of pushing. Therefore, the present invention contributes to functional improvements of mechanical elements of apparatuses, in which pushing operation can be easily performed but pulling operation is difficult to perform, such as a ventilation apparatus.

## Claims

1. A stepwise telescopic mechanism comprising:
an outer slider;
an inner slider disposed within said outer slider in a slidable manner;
a plurality of engagement recesses formed in either one of said outer slider and said inner slider such that said engagement recesses are aligned at predetermined intervals in a slide direction;
an engagement claw built into said inner slider or said outer slider, when a relative slide in a contraction direction is effected between said inner slider and said outer slider, said engagement claw coming into engagement with one of said plurality of engagement recesses to thereby bring said inner slider and said outer slider into an engaged state, when a relative slide in a contraction direction is effected between said inner slider and said outer slider;
engagement-urging means for urging said engagement claw in an engaging direction;
engagement-canceling means for canceling engagement of said engagement claw with a certain engagement recess, when the slide in the contraction direction is effected, in order to enable engagement of said engagement claw with another engagement recess;
engagement-impossible-state-creating means for creating a state in which said engagement claw is disabled from coming into engagement with said engagement recesses;
engagement-impossible-state-maintaining means for maintaining the engagement-impossible state created by said engagement-impossible-state-creating means;
engagement-impossible-state-canceling means for canceling the engagement-impossible state maintained by said engagement-impossible-state-maintaining means; and
extension-direction-urging means for producing urging force for urging said inner slider and said outer slider to slide in an extension direction opposite to the contraction direction, wherein
contraction motion of the stepwise telescopic mechanism is effected through an operation of pressing said inner slider or said outer slider against the urging force of said extension-direction-urging means in order to produce a relative slide in the contraction direction between said sliders, during which said engagement claw successively comes into engagement with the plurality of engagement recesses for stepwise contraction, and thus said stepwise telescopic mechanism maintains a length corresponding to the position of an engagement recess with which said engagement claw is in engagement; when said inner slider or said outer slide is pushed further in the state in which said stepwise telescopic mechanism has contracted to its shortest length, said engagement-impossible-state-creating means operates to bring said engagement claw into a state in which said engagement claw is disabled from coming into engagement with said engagement recesses, which state is maintained by said the engagement-impossible-state-maintaining means; while the above-described state is maintained, a slide in the extension direction is effected by means of the urging force of said extension-direction-urging means until said stepwise telescopic mechanism extends to a maximum length; and when said stepwise telescopic mechanism has extended to the maximum length, the engagement-impossible state of said engagement claw is canceled by said engagement-impossible-state-canceling means.

2. A stepwise telescopic mechanism according to claim 1, wherein
said plurality of engagement recesses are provided on said outer slider, while a pressure reception surface is provided on said outer slider to be located on the side opposite the side where said engagement recesses are provided;
said engagement claw has a claw at its tip end and a pressure contact portion at its base end and is rotatably built into the tip end portion of said inner slider, said engagement claw being rotatably supported by a rotary shaft at an intermediate position between said claw and said pressure contact portion and being constructed such that when said claw of said engagement claw is in engagement with one of said engagement recesses of said outer slider, said pressure contact portion of said engagement claw is in pressure contact with said pressure reception surface of said outer slider, thereby bringing said inner slider and said outer sliders into an engaged state;
said engagement-impossible-state-creating means is implemented in the form of an engagement-disabling guide portion provided on said outer slider at one side of said engagement recesses in its alignment direction, said engagement-unpossible-state-creating means having a structure in which when said inner slider or said outer slider is further pushed in its most contracted state, said engagement claw is rotated to a predetermined position in the disengaging direction due to a component force generated by pressure contact of said engagement claw against said engagement-disabling guide portion;
said engagement-impossible-state-maintaining means is implemented through combination of an engagement reception portion provided on said inner slider and an engagement portion provided on said engagement claw, said engagement-impossible-state-maintaining means having a structure such that when said engagement claw is rotated to the predetermined position by means of said engagement-disabling guide portion, said engagement portion of said engagement claw comes into engagement with said engagement reception portion, while creating a state in which the urging by said engagement-urging means is restricted; and
said engagement-impossible-state-canceling means is implemented in the form of an engagement-impossible-state-canceling guide portion provided on said outer slider at the side of said engagement recesses in its alignment direction opposite the side where said engagement-disabling guide portion is formed, said engagement-impossible-state-canceling means having a structure such that when said telescopic mechanism extends to the maximum length due to urging force of said extension-direction-urging means, said engagement claw comes into pressure contact with said engagement-impossible-state-canceling guide portion and rotates in the engaging direction, thereby canceling the engagement of said engagement portion with said engagement portion reception portion.

3. A stepwise telescopic mechanism according to claim 1, wherein
said plurality of engagement recesses are provided on said inner slider;
an engagement-claw-accommodating space is formed in said outer slider;
said engagement claw has a claw at its tip end and a pressure contact portion at its base end and is built into said engagement-claw-accommodating space of said outer slider, said engagement claw being rotatably supported by rotary shaft at an intermediate position between said claw and said pressure contact portion and being constructed such that when said claw of the engagement claw is in engagement with one of said engagement recesses of said inner slider, said pressure contact portion of said engagement claw is in pressure contact with the inner surface of said engagement-claw-accommodating space in order to bring said inner slider and said outer slider into an engaged state;
said engagement-impossible-state-creating means is implemented in the form of an engagement-disabling guide portion provided on said inner slider to be located on one side of said engagement recesses in its alignment direction, said engagement-impossible-state-creating means having a structure in which when said inner slider or said outer slider is further pushed in its most contracted state, said engagement claw is rotated to a predetermined position in the disengaging direction due to a component force generated by pressure contact of said engagement claw against said engagement-disabling guide portion;
said engagement-impossible-state-maintaining means is implemented through combination of an engagement reception portion provided in said engagement-claw-accommodating space of said outer slider and an engagement portion provided on said engagement claw, said engagement-impossible-state-maintaining means having a structure such that when said engagement claw is rotated to the predetermined position by means of said engagement-disabling guide portion, said engagement portion of said engagement claw comes into engagement with said engagement reception portion, while creating a state in which the urging by said engagement-urging means is restricted; and
said engagement-impossible-state-canceling means is implemented in the form of a pressure contact member provided at the tip end portion of said extension-direction-urging means, said engagement-impossible-state-canceling means having a structure such that when said telescopic mechanism extends to the maximum length due to urging force of said extension-direction-urging means, said pressure contact member comes into pressure contact with said engagement claw to cause said engagement claw to rotate in the engaging direction, thereby canceling the engagement of said engagement portion with said engagement reception portion.

4. A stepwise telescopic mechanism according to claim 1, wherein
said engagement claw is rotatably built into said inner slider or said outer slider and is constructed such that upon reception of urging force of said engagement-urging means, said engagement claw rotates to bring its claw into engagement with said engagement recess, and that upon reception of urging force of said extension-direction-urging means in this state, said engagement claw presses said inner slider against said outer slider, thereby bringing said inner slider and said outer slider into an engaged state against the urging force of said extension-direction-urging means;
said engagement-impossible-state-creating means is implemented in the form of an engagement-disabling guide portion provided on said inner slider or said outer slider to be located on one side of said engagement recesses in its alignment direction, said engagement-impossible-state-creating means having a structure in which when said inner slider or said outer slider is further pushed in its most contracted state, said engagement claw is rotated to a predetermined position in the disengaging direction due to a component force generated by pressure contact of said engagement claw against said engagement-disabling guide portion;
said engagement-impossible-state-maintaining means is implemented through combination of an engagement reception portion provided on said inner slider or said outer slider and an engagement portion provided on said engagement claw, said engagement-impossible-state-maintaining means having a structure such that when said engagement claw is rotated to the predetermined position by means of said engagement-disabling guide portion, said engagement portion of said engagement claw comes into engagement with said engagement reception portion, whereby said engagement claw is brought into an engagement impossible state; and
said engagement-impossible-state-canceling means is implemented in the form of an engagement-impossible-state-canceling guide portion provided on said outer slider or in the form of a pressure contact member provided at the tip end portion of said extension-direction-urging means, said engagement-impossible-state-canceling means having a structure such that when said telescopic mechanism extends to the maximum length due to urging force of said extension-direction-urging means, said engagement claw comes into pressure contact with said engagement-impossible-state-canceling guide portion or said pressure contact member and rotates in the engaging direction, whereby the engagement of said engagement portion with said engagement reception portion is canceled.

5. A stepwise telescopic mechanism according to claim 1, wherein
said plurality of engagement recesses are provided on said outer slider;
said engagement claw is built into the tip end portion of said inner slider to be slidable in a direction intersecting the slide direction of said inner slider and said outer slider, and has a structure in which through advance slide of said engagement claw, said claw provided at the tip end of said engagement claw comes into engagement with said engagement recesses formed on said outer slider in order to bring said inner and said outer sliders into an engaged state;
said engagement-impossible-state-creating means is implemented in the form of an engagement-disabling guide portion provided on said outer slider to be located on one side of said engagement recesses iii its alignment direction, said engagement-impossible-state-creating means having a structure in which when said inner slider or said outer slider is further pushed in the most contracted state, said engagement claw is slid to a predetermined position in the disengaging direction due to a component force generated by pressure contact of said engagement claw against said engagement-disabling guide portion;
said engagement-impossible-state-maintaining means is implemented through combination of an engagement reception portion provided on said inner slider and an engagement portion provided on said engagement claw, said engagement-impossible-state-maintaining means having a structure such that when said engagement claw is slid to the predetermined position by means of said engagement-disabling guide portion, said engagement portion of said engagement claw comes into engagement with said engagement reception portion, whereby said engagement claw is brought into an engagement impossible state; and
said engagement-impossible-state-canceling means is implemented in the form of an engagement-impossible-state-canceling guide portion provided on said outer slider to be located on the side opposite the side where said engagement recesses are provided, said engagement-impossible-state-canceling means having a structure such that when said telescopic mechanism extends to the maximum length due to urging force of said extension-direction-urging means, the engagement of said engagement portion with said engagement reception portion is canceled due to a component force produced by pressure contact of said engagement claw with said engagement-impossible-state-canceling guide portion, and said engagement claw is caused to slide in the engaging direction.

6. A stepwise telescopic mechanism according to claim 1, wherein
said plurality of engagement recesses are provided on said inner slider;
said engagement claw is built into said outer slider to be slidable in a direction intersecting the slide direction of said inner slider and said outer slider, and has a structure in which upon reception of urging force of said engagement-urging means, said engagement claw slides in the engaging direction to cause its claw to come into engagement with said engagement recesses of said inner slider, thereby bringing said inner and said outer sliders into a fixed state against the urging force of said extension-direction-urging means;
said engagement-impossible-state-creating means is implemented in the form of an engagement-disabling guide portion provided on said inner slider at one side of said engagement recesses in its alignment direction, said engagement-impossible-state-creating means having a structure in which when said inner slider or said outer slider is further pushed in its most contracted state, said engagement claw is slid to a predetermined position in the disengaging direction due to a component force generated by pressure contact of said engagement claw against said engagement-disabling guide portion;
said engagement-impossible-state-maintaining means is implemented through combination of an engagement reception portion provided on said outer slider and an engagement portion provided on said engagement claw, said engagement-impossible-state-maintaining means having a structure such that when said engagement claw is slid to the predetermined position by means of said engagement-disabling guide portion, said engagement portion of said engagement claw comes into engagement with said engagement reception portion, whereby said engagement claw is brought into an engagement impossible state; and
said engagement-impossible-state-canceling means is implemented in the form of a pressure contact member provided at the tip end portion of said extension-direction-urging means, said engagement-impossible-state-canceling means having a structure such that when said telescopic mechanism extends to the maximum length due to urging force of said extension-direction-urging means, said pressure contact member comes into pressure contact with said engagement claw to cause said engagement claw to slide in the engaging direction, whereby said fixed state is canceled.
